# EUROPÄISCHE PATENTSCHRIFT

(11) **EP 4 126 651 B1**
(45) Veröffentlichungstag und Bekanntmachung des Hinweises auf die Patenterteilung: **27.03.2024**
(21) Anmeldenummer: 21704509.5
(22) Anmeldetag: 09.02.2021
(51) Int. Cl.: B63B 1/10, B63B 1/12, B63B 75/00, B63B 35/44, B63B 3/04

(54) **FACHWERK UND DARAUS AUFGEBAUTE TRAGSTRUKTUREN**
TRUSS AND SUPPORTING STRUCTURES CONSTRUCTED THEREFROM
TREILLIS ET STRUCTURES DE SUPPORT CONSTRUITES À PARTIR DE CELUI-CI

(30) Priorität: 23.03.2020 WO PCT/EP2020/058041
(43) Veröffentlichungstag der Anmeldung: 08.02.2023
(73) Patentinhaber: Sinn Power GmbH, 82131 Gauting (DE)
(72) Erfinder: SINN, Philipp, 82131 Gauting (DE); SCHWAIGER, Dominik, 82131 Gauting (DE); BOSCHER, Patrick, 82131 Gauting (DE)
(74) Vertreter: Kuhnen & Wacker Patent- und Rechtsanwaltsbüro PartG mbB
(86) Internationale Anmeldenummer: PCT/EP2021/053112
(87) Internationale Veröffentlichungsnummer: WO 2021/190815

(56) Entgegenhaltungen:
- WO-A1-87/03170
- WO-A1-2012/098564

## Beschreibung

Die Erfindung betrifft schwimmfähige, im Wesentlichen flächig aufgebaute Fachwerke und daraus modular zusammengesetzte, schwimmfähige 2- und 3-dimensionale Tragstrukturen und ein Verfahren zum Aufbau derselben, beispielsweise als Tragstruktur für schwimmende Plattformen, beispielsweise für die Aufständerung von Solarpanelen und Windenergieanlagen, oder als Tragstruktur für Wellenkraftwerke.

Schwimmende Plattformen, wie beispielsweise mittels Schwimmkörper getragene Plattformen oder Pontons und dergleichen, sind vielfältig im Stand der Technik bekannt. Viele dieser Strukturen sind kompliziert in ihrem Aufbau und werden daher oftmals an Land montiert, um im montierten Zustand an ihren Einsatzort gebracht zu werden. Dies begrenzt insbesondere die Baugröße solcher Plattformen.

Tragstrukturen mit einer größeren Flächenausdehnung, welche offshore zusammengesetzt werden, sind oftmals nur schwer manipulier- bzw. manövrierbar, insbesondere, wenn diese auf offener See, d.h. im Meer, zum Einsatz kommen sollen. Hierbei verursacht speziell der Aufbau "offshore" einen hohen Einsatz an Hilfsmitteln und somit Kosten, die bei diesen flächenhaft ausgedehnten Tragstrukturen sehr hoch sein können.

WO 87/03170 A1 offenbart ein Fachwerk für den modularen Aufbau einer Offshore-Fachwerkstruktur.

Es ist daher Aufgabe der Erfindung eine Tragstruktur bereit zu stellen, welche mit einfachen Mitteln und kostengünstig erstellt werden kann, wobei die Tragstruktur modular aufbaubar und erweiterbar sein soll. Dabei soll der Herstell- und Montageaufwand auf ein Minimum reduziert werden, insbesondere der Montageaufwand offshore. Mit der erfindungsgemäßen Tragwerksstruktur soll darüber hinaus eine robuste, schwimmfähige Tragstruktur bereitgestellt werden können, die in ihren Dimensionen und Tragkraft flexibel anpassbar ist.

Die Aufgabe wird gelöst, durch ein schwimmfähiges, im Wesentlichen flächig ausgebildetes Fachwerk gemäß Anspruch 1. Vorteilhafte Ausgestaltungen sind in den davon abhängigen Unteransprüchen angegeben. Die erfindungsgemäße Aufgabe wird weiter durch eine schwimmfähige Fachwerkstruktur nach Anspruch 8 oder 11 gelöst. Bevorzugte Ausführungsformen dieser Fachwerkstrukturen sind mit den davon abhängigen Unteransprüchen angegeben. Mit Anspruch 20 ist ferner ein Wellenkraftwerk angegeben, welches modular aus einer Vielzahl von erfindungsgemäßen Fachwerkstrukturen aufgebaut ist, die wiederum aus den erfindungsgemä-ßen Fachwerken modular aufgebaut sind. Zur Lösung der Aufgabe ist in Anspruch 21 sowie in den davon abhängigen Unteransprüchen weiterhin ein Verfahren zum Verbinden zumindest zweier, erfindungsgemäßer, Fachwerke angegeben.

Die erfindungsgemäße Basiseinheit bildet ein Fachwerk, welches für den modularen Aufbau einer Offshore Fachwerkstruktur vorgesehen und im Wesentlichen flächig ausgebildet ist. Das erfindungsgemäße Fachwerk weist einen ersten als Schwimmkörper funktionierenden Riegel und einen zweiten Riegel auf, die parallel zueinander mittels zwei seitlicher Pfosten abgestützt sind. Mittels zweier Bänder kann das Fachwerk diagonal in Form gehalten bzw. verspannt werden. Zum Verbinden der Riegel mit den Pfosten und der Bänder sind an den Enden der Riegel Verbindungselemente mit jeweils einem einzigen Flansch zum Anbinden der Verbindungselemente an die Riegel angeordnet. Falls der erste und/oder der zweite Riegel aus einem Hohlkörper aufgebaut ist, können die Flansche die Riegel fluiddicht verschließen, sodass ein darin aufgenommenes Luftvolumen eine entsprechende Auftriebskraft erzeugt. Bei Verwendung metallischer Werkstoffe kann dies beispielsweise mittels Verschweißen der Flansche mit den Riegeln erfolgen. Andere fachübliche Verbindungen, wie beispielsweise ein Verschrauben oder Verkleben, ggf. mit Dichtungen, sind hierbei vom Erfindungsgedanken ebenfalls umfasst. In einer weiteren Ausführungsform ist zumindest der erste Riegel als fluiddichter Hohlkörper ausgebildet, an dessen Enden die Verbindungselemente befestigt werden können. Zusätzlich dazu können aber auch die zweiten Riegel und/oder die Pfosten als fluiddichte Hohlkörper ausgebildet sein, alternativ können die Verbindungselemente die Riegel und/oder Pfosten fluiddicht verschließen.

Bevorzugt bilden die Riegel zusammen mit den daran an deren Enden angebrachten Verbindungselementen eine insbesondere an Land vormontierte Baugruppe des erfindungsgemäßen Fachwerks. Dabei weisen die Verbindungselemente neben dem einen Flansch, mittels dem ein Ende eines Riegels an das Verbindungselement angebunden werden kann, Aufnahmen zum Anbinden der Pfosten an die Riegel quer zur Längsrichtung der Riegel auf, um die Riegel parallel beabstandet zu halten. Bevorzugt werden diese seitlichen Pfosten, die im Wesentlichen senkrecht zu den Riegeln ausgerichtet sind, lediglich mit den Aufnahmen zusammen gesteckt. Weiter bevorzugt geschieht dies ohne Zuhilfenahme von Werkzeug, sodass alle bekannten Arten von starren oder gelenkigen Steck-, Klemm-, Clip-Verbindungen vom Erfindungsgedanken umfasst sind, die zum Anbinden der Pfosten an die Verbindungselemente ohne Werkzeug geeignet sind.

Zum in Form halten, ggf. Verspannen und Zusammenhalten des erfindungsgemäßen Fachwerks, und somit auch der Riegel mit den Pfosten, werden Bänder eingesetzt, welche Spannvorrichtungen aufweisen. Diese Bänder, sind an Befestigungsmitteln an den Verbindungselementen befestigbar und fixieren das Fachwerk diagonal, bzw. halten es in der im Wesentlichen rechteckigen Form. Unter den Begriff Bänder fallen dabei Zug- und Zurrgurte, genauso wie Streben mit Spannvorrichtung, beispielsweise mit entsprechenden Links-Rechtsgewinden, Seile, etc.

In einem bevorzugten Ausführungsbeispiel werden Bolzen quer zur Längsrichtung der Riegel und quer zur Längsrichtung der Pfosten in die Verbindungselemente eingesetzt, wobei die Bolzen weiter bevorzugt drehbar sind, jedoch durch die darin eingesetzten Bänder axial fixiert in den Verbindungselementen aufgenommen sind. In einer Ausführungsform der Erfindung sind die als Bänder ausgebildeten Fachwerkstreben an der Spannvorrichtung teilbar und weisen jeweils an dem der Spannvorrichtung gegenüberliegendem Ende einen Bund auf, dessen Durchmesser größer ist als der der Querbohrung des im Verbindungselement aufgenommenen Bolzens. Mittels der Spannvorrichtung können die Bänder/Fachwerkstreben nach Einsetzen in die Verbindungselemente bzw. in die drehbaren Bolzen, miteinander verbunden, d.h. diagonal miteinander verspannt werden, sodass das erfindungsgemäße Fachwerk in sich fest verbunden ist und alle beteiligten Bauteile festgesetzt sind. Mittels der Drehbarkeit der Bolzen in den Verbindungselementen ist das erfindungsgemäße Fachwerk skalierbar, da sich bei einem Verlängern der Riegel und/oder Pfosten neben der Länge der Fachwerkdiagonalen auch deren Winkel ändert.

In einer Ausführungsform der erfindungsgemäßen Bänder sind an den Enden der Bänder Einrastvorrichtungen, Klemmvorrichtungen oder ähnliche Vorrichtungen zur form- oder kraftschlüssigen Fixierung der Bänder an den Verbindungselementen ausgebildet. Diese Vorrichtungen dienen der Fixierung der Bänder in den drehbar in den Verbindungselementen gelagerten Bolzen und können einteilig ausgebildet sein. Beispielsweise können die Enden der Bänder gegenüber dem Innendurchmesser der in den Bolzen eingebrachten Bohrung einen größeren Durchmesser aufweisen. Um ein Hindurchschieben der Bänderenden durch die in den Bolzen eingebrachten Bohrungen zu ermöglichen, sind Schlitze in den Bänderenden vorgesehen, die eine elastische Verformung der Bänderenden beim Hindurchschieben ermöglichen. Nach dem Hindurchschieben wird die elastische Verformung der Bänderenden rückgängig gemacht, und die Bänder bilden einen Formschluss mit dem Bolzen aus, bspw. mittels eines Hinterschnitts.

Die Vorrichtungen zum Fixieren der Bänder an den erfindungsgemäßen Bolzen können aber auch mehrteilig ausgeführt sein. Beispielsweise kann ein Rastmechanismus am Ende der Bänder zur Verfügung gestellt werden, der nach dem Hindurchschieben des Bandes durch die Bohrung im Bolzen durch ein Gegenstück gekontert wird, wodurch das Band gegen Herausfallen gesichert wird.

Bei einem Verspannen beispielsweise mit Zuggurten als Bänder erübrigen sich die drehbar in den Verbindungselementen aufgenommen Bolzen, da die Befestigungsmittel für die Bänder beispielsweise in Art einer Durchführung, einer Öse oder eines Schlitzes ausgebildet sind.

In einer Ausführungsform der Erfindung sind die Pfosten zwar mittels der Aufnahmen mit den Verbindungselementen verbunden, jedoch sind die Verbindungselemente, bzw. deren Aufnahmen, nicht an den Enden der Pfosten, sondern zwischen den Enden der Pfosten angeordnet. Teile der Pfosten können somit in Längsrichtung der Pfosten vom erfindungsgemäßen Fachwerk nach außen abstehen. Die überstehenden Teile der Pfosten können in vielfältiger Weise genutzt werden, beispielsweise zur Befestigung von Anbauteilen, wie Schwimmkörpern oder Hebevorrichtungen, in Verlängerung der Pfosten.

Somit kann ein erfindungsgemäßes Fachwerk durch einfaches, bevorzugt Werkzeug-loses Anbinden der Pfosten an die mit Verbindungselementen versehenen Riegel und mittels Einführen von (teilbaren) Bändern in Durchführungen oder mittels Einführen von Fachwerkstreben in drehbare Bolzen mit Querbohrungen, die an den Verbindungselementen angeordnet sind, allein durch die an den Bändern vorgesehenen Spannvorrichtungen in Form bzw. zusammengehalten werden. Dadurch ist ein minimaler Einsatz an Hilfsmitteln zum Aufbau eines erfindungsgemäßen Fachwerks erforderlich. Erfindungsgemäß sind die ersten Riegel schwimmfähig bzw. funktionieren als Schwimmkörper. Dabei erzeugen sie eine Auftriebskraft, die die Gewichtskraft ihres Eigengewichts in Wasser reduziert, ausgleicht oder gar übersteigt. In einer bevorzugten Ausführungsform ist die Auftriebskraft des ersten Riegel so hoch, dass ein Fachwerk schwimmend an einer Wasseroberfläche gehalten werden kann, wobei in anderen Ausführungsformen die Auftriebskraft der ersten Riegel geringer ist, und zusätzliche Schwimmkörper beispielsweise an oder in Verlängerung der Pfosten am Fachwerk angeordnet werden können.

Bevorzugt kann daher das erfindungsgemäße Fachwerk als Baugruppe, beispielsweise an Land, aufgebaut werden und zum Ausbilden einer Fachwerkstruktur an Land oder offshore oder zum Erweitern einer Tragwerkstruktur "offshore" verbracht werden. In einer anderen Ausführungsform kann aus mehreren erfindungsgemäßen Fachwerken an Land oder in Ufernähe ein Offshore-Tragwerkstrukturmodul zusammengesetzt werden und beispielsweise mittels eines Schleppers an seinen Einsatzort gebracht werden, wo es mit weiteren Offshore-Fachwerkstruktur-Modulen verbunden werden kann. Weiteres hierzu unten.

Die Schwimmfähigkeit eines erfindungsgemäßen Fachwerks kann, wie oben bereits angedeutet durch die Ausbildung der ersten Riegel als Hohlkörper, die mit den Verbindungselementen fluiddicht verschlossen sind, oder die als fluiddichte Hohlkörper ausgebildet sind, die an die erfindungsgemäßen Verbindungselemente befestigbar sind, gewährleistet werden. Es ist vom Erfindungsgedanken umfasst, dass neben dem ersten Riegel auch der zweite Riegel und/oder die Pfosten einen runden Querschnitt aufweisen und/oder als Hohlkörper ausgebildet sind. Zusätzliche Auftriebskörper können an den ersten oder zweiten Riegeln bzw. den Pfosten temporär oder permanent angebracht werden, beispielsweise um den Auftrieb der erfindungsgemäßen Fachwerke zu erhöhen.

Wenn der zweite Riegel und/oder die Pfosten einen fluiddicht abgeschlossenen Hohlraum aufweisen, bzw. durch die Verbindungselemente fluiddicht verschlossen sind, so können der zweite Riegel und/oder die Pfosten zusätzlich zum ersten Riegel als Schwimmkörper fungieren und zum Auftrieb des erfindungsgemäßen Fachwerks beitragen.

Im erfindungsgemäßen Fachwerk können die ersten und zweiten Riegel unterschiedliche Querschnitte oder unterschiedlich große Durchmesser aufweisen, bzw. aus unterschiedlichen Materialien gefertigt sein, da die zweiten Riegel oftmals nicht zur Auftriebskraft beitragen müssen, auch wenn dies vollstellbar ist. Dies gilt insbesondere in Anwendungsfällen, in denen die erfindungsgemäßen Fachwerke senkrecht in einer Tragstruktur ausgerichtet sind, wobei beispielsweise die ersten Riegel die unteren Riegel bilden. Hierbei sind dann insbesondere die auf oder kurz unter der Wasseroberfläche schwimmenden ersten Riegel für das Erzeugen einer Auftriebskraft ausschlaggebend. Es ist daher vorstellbar, den Durchmesser eines ersten Riegels sehr viel größer auszugestalten als den Durchmesser des anderen, zweiten Riegels, um so beispielsweise Gewicht einzusparen. Aus Wirtschaftlichkeitsgründen ist jedoch ebenfalls vorstellbar, die beiden Riegel als Gleichteile auszuführen, da dann auch die Verbindungselemente, von denen vier in jedem Fachwerk verbaut werden, als Gleichteile ausbildbar sind, ohne dass Adapterstücke erforderlich sind. Ggf. sind dann zur Erzeugung ausreichend hoher Auftriebskräfte die Anordnung weitere Schwimmkörper in Verlängerung der Pfosten oder an den Riegeln erforderlich. Auch die Verwendung gleicher Materialien für die beiden Riegel ist erfindungsgemäß nicht notwendig, sodass beispielsweise der eine Auftriebskraft erzeugende erste Riegel beispielsweise aus einem Kunststoff oder Kunststoffverbundwerkstoff hergestellt werden kann, wobei der andere parallele (obere) zweite Riegel aus einem metallischen Material bestehen kann und bspw. eine Querschnittsform eines Doppel-T-Trägers aufweist und weiter bspw. aus Meerwasser-festem (resistentem) Aluminium gefertigt ist.

Prinzipiell können alle Materialien zum Einsatz kommen, die fachüblich zur Erzeugung einer Auftriebskraft verwendet werden können, wie Hohlkörper, Materialien mit einer Dichte geringer als die von Wasser, insbesondere Salzwasser. Hierbei kann beispielsweise auch an geschäumte Materialien gedacht werden, die beispielsweise einen massiven Kern des Riegels umgeben, der etwa aus Festigkeitsgründen notwendig ist.

Dabei können die Riegel, die Pfosten, die Verbindungselemente, Teile der Verbindungselemente, und/oder die Bänder aus einem metallischen Werkstoff, aus einem Kunststoff, aus einem nicht biegesteifen, elastischen Material oder einem Verbundwerkstoff gefertigt sein, wobei jedes Bauteil aus dem Werkstoff gebildet werden sollte, der die Anforderungen an das Bauteil am besten erfüllt.

Zur weiteren Erhöhung der Auftriebskraft ist in einem weiteren erfindungsgemäßen Ausführungsbeispiel ein Schwimmkörper an den Fachwerken befestigbar, beispielsweise in Verlängerung der Pfosten, die die beiden Riegel parallel zueinander beabstanden. Schwimmkörper können aber auch parallel zur Ebene des Fachwerks angebracht werden, wenn das Fachwerk beispielsweise parallel zur Wasseroberfläche angeordnet werden soll. Unabhängig von der Lage des erfindungsgemäßen Fachwerks können die Schwimmkörper somit zwischen dem Fachwerk und der Wasseroberfläche angeordnet werden. Eine Befestigung eines Schwimmkörpers auf halber Strecke zwischen den beiden Verbindungselementen ist jedoch genauso vom Erfindungsgedanken umfasst, wie die Anordnung zweier oder mehrerer Schwimmkörper auch übereinander am erfindungsgemäß bevorzugt allein schwimmfähigen Fachwerk.

Zusätzlich oder alternativ zu den Schwimmkörpern können Teile einer Aufständerung, beispielsweise für Solaranlagen oder Windkraftanlagen, oder ein Teil einer Halterung für eine Plattform oder Hebeeinrichtungen an den erfindungsgemäßen Fachwerken angeordnet sein. Abhängig von der Einbaulage der erfindungsgemäßen Fachwerke werden diese Anbauten entweder parallel zur Ebene der erfindungsgemäßen Fachwerke befestigt oder bspw. in Verlängerung eines der Pfosten.

Damit die erfindungsgemäßen Fachwerke schräg oder quer oder auch parallel zu ihrer Flächenausdehnung miteinander verbindbar sind oder zu einer dreidimensionalen Struktur verbindbar sind, ist auf einer Seite der Verbindungselemente ein Fortsatz und auf der gegenüberliegenden Seite eine Halterung ausgebildet, sodass der Fortsatz eines Verbindungselements eines ersten Fachwerks mit der Halterung eines anderen Verbindungselements eines weiteren, zweiten Fachwerks verbunden werden kann.

In einer bevorzugten Ausführungsform sind die Verbindungselemente asymmetrisch aufgebaut und können dadurch an allen Eckpunkten des erfindungsgemäßen Fachwerks als Gleichteile ausgeführt werden, da immer zwei benachbarte Verbindungselemente zweier Fachwerke in einer Art Männchen-Weibchen-Verbindung miteinander verbindbar sind. So wird ein besonders einfaches Verbinden zweier Fachwerke mit einer Mindestanzahl an Bauteilen ermöglicht.

Neben einem asymmetrischen Aufbau der Verbindungselemente, ist es auch vom Erfindungsgedanken umfasst, die Verbindungselemente symmetrisch auszuführen, d.h. dass der Fortsatz und die Halterung der Verbindungselemente im Wesentlichen gleich ausgeführt sind. Im Falle von symmetrischen Verbindungselementen wird erfindungsgemäß beispielsweise ein Adapterteil bereitgestellt, welches mit der Halterung des einen Verbindungselements eine Männchen-Weibchen-Verbindung eingeht und gleichzeitig mit dem Fortsatz eines anderen Verbindungselements ebenfalls in Männchen-Weibchen-Art im Eingriff steht. Insgesamt kann also auch ein symmetrisch aufgebautes Verbindungselement, dessen Fortsatz
oder dessen Halterung durch ein erfindungsgemäßes Adapterteil erweitert ist, wieder als asymmetrisches Verbindungselement betrachtet werden, das mit einem bezüglich des Adapterteils gegengleichen, weiteren Verbindungselement im Eingriff steht.

Eine Ausführungsform der Erfindung weist Fortsätze an den Verbindungselementen auf, in die ein Verbindungsauge eingebracht ist, in welches wiederum ein Verbindungsbolzen einsetzbar ist. Zum Festsetzen eines solchen Verbindungsbolzens sind auf der dem Verbindungsauge gegenüber liegenden Seite des Verbindungselementes Anschraubpunkte für Halterungen vorgesehen, die die jeweiligen Verbindungsbolzen im Verbindungsauge eines benachbarten Verbindungselementes in axialer Richtung und in einigen Ausführungsformen zusätzlich in radialer Richtung fixieren können. Somit ist es erfindungsgemäß möglich, mit Gleichteilen für die Verbindungselemente sowohl das erfindungsgemäße Fachwerk an sich zusammenzuhalten, als auch über diese Verbindungselemente mehrere erfindungsgemäße Fachwerke miteinander zu verbinden. Die genaue Ausgestaltung des Verbindungsauges gegebenenfalls mit Verstärkungsbuchsen als auch die genaue Ausgestaltung der Verbindungsbolzen, welche bevorzugt konische Enden aufweisen, sowie der Halteelemente zum Fangen und Arretieren der Verbindungsbolzen sind fachüblich keine Grenzen gesetzt. Eine konkrete Ausführungsform wird unten anhand der beigefügten Figuren näher beschrieben.

In einer bevorzugten Ausführungsform der Erfindung ist ein Auftriebs-Gewichts-Verhältnis zumindest des ersten Riegels veränderlich. Beispielsweise können Flutungsmittel vorgesehen werden, mittels derer der erste Riegel mit Wasser befüllt oder von Wasser entleert werden kann. Zusätzlich oder alternativ können auch Beschwerungsmittel eingesetzt werden, die entfernbar (lösbar) an dem ersten Riegel anbringbar sind und die das Gewicht und/oder den Auftrieb des ersten Riegels erhöhen oder verringern. Bevorzugt ist der zweite Riegel in dieser Ausführungsform des erfindungsgemäßen Fachwerks ebenfalls schwimmfähig.

Erfindungsgemäß kann entweder der als Hohlkörper ausgebildete, erste Riegel oder zumindest eines der an dem Riegel angeordneten Verbindungselemente eine Öffnung aufweisen, durch die der erste Riegel mit Wasser befüllt oder entleert werden kann. Ein Fachmann wird die Lage der Öffnung dabei passend zur Anwendung wählen. So kann es beispielsweise bevorzugt sein, die Öffnung an der tiefsten Stelle des zur entleerenden Hohlkörpers anzuordnen, da dann besonders einfach und unter Zuhilfenahme des Eigengewichts des Wassers, das gesamte Wasser aus dem Hohlkörper entnommen werden kann. In diesem Falle kann es nötig sein, eine schnorchel- oder schlauchartige Vorrichtung an der Öffnung bereitzustellen, mittels derer ein Zugang zur Öffnung von der Wasseroberfläche ermöglicht wird. Bevorzugt ist die Öffnung wasserdicht verschließbar, beispielsweise durch einen steck- oder schraubbaren Stopfen, der in die Öffnung eingebracht werden kann. Andere, dem Fachmann bekannte Arten oder Vorrichtungen, die Öffnung fluiddicht zu verschließen, wie beispielsweise Aufschweißen eine Dichtkappe, Verkleben oder Ein- bzw. Aufbringen von aushärtbaren Dichtmitteln, sind vom Erfindungsgedanken umfasst.

Des Weiteren können auch mehrere Öffnungen an den Riegeln angeordnet werden, wenn dies für den Flutungs- bzw. Entleerungsvorgang erforderlich ist. Beispielsweise kann eine Öffnung an der Oberseite und eine Öffnung an der Unterseite eines Riegels bereitgestellt werden. Durch die unterseitig angeordnete Öffnung kann dabei beispielsweise Wasser in den Riegel eintreten, bzw. gepumpt werden, wobei die durch das Wasser verdrängte Luft durch die oberseitige Öffnung entweichen kann. Im umgekehrten Fall kann beispielsweise mittels der oberseitigen Öffnung Luft in den Riegel strömen, wenn Wasser durch die unterseitige Öffnung aus dem Riegel gesaugt wird. Selbstredend wird ein Fachmann die Zahl und Anordnung der Öffnungen sowie die zum Fluten und Entleeren verwendeten Mittel und Werkzeuge an den Anwendungsfall angepasst auswählen. So kann beispielsweise statt Luft auch ein anderes Gas verwendet werden oder statt (Meer)wasser eine andere Flüssigkeit. Auch die Verwendung von gänzlich anderen Materialien, wie beispielsweise aushärtbaren Schäumen, ist vom Erfindungsgedanken umfasst.

Die erfindungsgemäßen Fachwerke können in einer Ausführungsform der Erfindung, beispielsweise, wenn beide Riegel, d.h. der erste Riegel und der zweite Riegel schwimmfähig sind, auch flach auf einem Gewässer schwimmend verwendet werden, um als eine Art Ponton, schwimmender Rahmen oder schwimmendes Gerüst für schwimmfähige Plattformen Verwendung zu finden.

Aus mehreren erfindungsgemäßen Fachwerken kann beispielsweise eine flächig auf der Wasseroberfläche schwimmende, schachbrettartige Offshore-Fachwerkstruktur aufgebaut werden. Hierfür werden mehrere Fachwerke auf der Wasseroberfläche schwimmend, das heißt parallel zur Wasseroberfläche ausgerichtet, angeordnet und mittels der in den Ecken der Fachwerke angeordneten Verbindungselemente verbunden. Dadurch entsteht eine schachbrettartige, sich entlang der Wasseroberfläche ausdehnende Struktur, in der Fachwerke und "freie" Felder alternierend angeordnet sind. In einer weiteren Ausführungsform sind sowohl die beiden Riegel als auch die Pfosten eines erfindungsgemäßen Fachwerks schwimmfähig ausgeführt. Es ist jedoch auch möglich, dass nicht alle Elemente des erfindungsgemäßen Fachwerks schwimmfähig sind, je nachdem, wie viel Auftrieb durch das Fachwerk erzeugt werden muss.

Weiter bevorzugt sind in den freien, leeren Feldern der schachbrettartigen Offshore-Fachwerkstruktur mit Spannvorrichtungen versehene Bänder zwischen den in diagonal gegenüberliegenden Ecken angeordneten Verbindungselementen gespannt. Die erfindungsgemäßen Bänder sind dabei ähnlich oder auch baugleich zu den Bändern ausgeführt, die zum diagonalen Verspannen eines erfindungsgemäßen Fachwerks herangezogen werden. Das heißt, dass beispielsweise die Spannvorrichtungen oder die Enden der Bänder vielfältig fachüblich ausgestaltet sein können. Durch ein diagonales Verspannen der leeren Felder mit Bändern wird die Stabilität dieser (freien) Felder und damit die Stabilität und Widerstandsfähigkeit der gesamten flächigen Struktur gegen von außen aufgebrachte Verformungen, beispielsweise durch Wellen, erhöht.

Die Verbindungselemente oder Adapterstücke oder Teile der Verbindungselemente, mittels derer die Fachwerke der schachbrettartigen Offshore- Fachwerkstruktur zusammengehalten werden, können elastisch deformierbar ausgebildet sein, das heißt, dass sie unter Einwirkung der normalerweise im Betrieb der Offshore-Fachwerkstruktur auftretenden Kräfte, ein elastisches Materialverhalten zeigen. Führen zwei benachbarte Fachwerke eine Relativbewegung zueinander aus, beispielsweise, weil eine Welle unter der Offshore-Fachwerkstruktur hindurchschwappt, so kann diese Relativbewegung durch eine elastische Verformung des Materials der Verbindungselemente ausgeglichen werden, ohne dass es zu einer plastischen Deformation der Bauteile der Offshore-Fachwerkstruktur oder gar einem Materialversagen kommt. In bestimmten Anwendungen kann es ausreichend oder gar erforderlich sein, nur Teile der Verbindungselemente, bspw. die Halterungen, elastisch deformierbar auszugestalten. Hierbei kann aus einer Vielzahl von elastisch deformierbaren Materialen oder Materialkombinationen, beispielsweise Elastomeren, Kunststoffen oder faserverstärkten Kunststoffen, ausgewählt werden. Wie oben bereits ausgeführt, ist die Spezifikation "elastisch deformierbar" dabei immer im Lichte der im Betrieb der Fachwerkstruktur auftretenden Kräfte zu beurteilen.

Wie oben bereits angedeutet, können die erfindungsgemäßen und ggf. allein schwimmfähigen Fachwerke alternativ zu der vorher genannten, flächigen, teppichartigen, eher 2-dimensionalen Struktur auch zu einem schwimmfähigen, erfindungsgemäßen 3-dimensionalen Fachwerkstrukturmodul in Form eines geraden Dreieck-Prismas oder eines geraden Viereck- oder Vieleck-Prismas mittels geeigneter Verbindungselemente zusammengesetzt werden. Charakteristisch für solche geraden Prismen sind deren kongruente Grund- und Deckflächen. Erfindungsgemäß bilden die oben beschriebenen Fachwerke als Basisbaugruppen die Seitenflächen derartiger Fachwerkstruktur-Module gemäß der Erfindung, die ihrerseits als Baugruppe für erfindungsgemäße Offshore-Fachwerkstrukturen dienen.

Erfindungsgemäß ist es bevorzugt, dass die Fachwerke in den erfindungsgemäßen Offshore-Fachwerkstruktur-Modulen senkrecht, d.h. vertikal zu einer Wasseroberfläche, ausgerichtet sind, wobei die ersten Riegel im oder auf dem Wasser schwimmen. Diese Fachwerkstruktur-Module, welche insbesondere modulare Grundkörper für flächenhafte 3D-Tragwerkstrukturen, beispielsweise zum Aufbau einer großflächigen Offshore-Fachwerkstruktur bilden, können hierbei sowohl an Land als auch auf See zusammengesetzt werden. Da die Fachwerke in sich steif und verspannt sind, sind sie einfacher transportier, montier- und manipulierbar, als deren Einzelteile selbst. Dies gilt insbesondere auch dann, wenn die Fachwerke bei Wellengang zusammengefügt werden sollen.

Eine aus drei erfindungsgemäßen Fachwerken gebildete Fachwerkstruktur stellt dabei das kleinste Fachwerkstruktur-Modul dar, ein gerades Dreiecks-Prisma. Dabei spannen die ersten Riegel eine in etwa dreieckige Grundfläche auf, wobei die zweiten Riegel eine dazu kongruente dreieckige Deckfläche aufspannen. Da die in diesem Fall drei erfindungsgemäße Fachwerke senkrecht angeordnet sind, werden die Seitenkanten eines solchen Dreiecksprismas durch jeweils zwei seitliche Stangen (Pfosten) zweier benachbarter Fachwerke gebildet. Verbunden sind die Fachwerke dabei über die Verbindungselemente. Konkret - wie oben bereits ausgeführt - beispielsweise über an den Verbindungselementen ausgebildete Fortsätze mit Verbindungsaugen, in denen Verbindungsbolzen einsetzbar sind, die von Halterungen, welche an das benachbarte Verbindungselement beispielsweise anschraubbar sind, gehalten werden. Aufgrund der geraden Dreiecks-Prismenstruktur ist ein solches Modul in sich stabil und benötigt keine Verspannungen in der jeweiligen Grund- oder Deckfläche, obwohl solche vorstellbar sind.

Werden vier erfindungsgemäße Fachwerke jeweils vertikal stehend miteinander verbunden, ergibt sich eine im Wesentlichen quaderförmige Struktur, wobei die vertikalen Seitenkanten aus jeweils zwei seitlichen Stangen/Pfosten benachbarter Fachwerke gebildet sind. Hier bilden die ersten Riegel als auch die zweiten Riegel jeweils eine im Wesentlichen rechteckige Grund- bzw. Deckfläche aus. Auch hier werden benachbarte Fachwerke mittels der Verbindungselemente, wie oben bereits beschrieben, miteinander verbunden.

Zusätzlich können die Verbindungbolzen der einzelnen Verbindungselemente Querbohrungen aufweisen, in welche mit Spannvorrichtungen versehene Verbinder einführbar sind, um die Fachwerkstruktur-Module beispielsweise in der Grundfläche als auch der Deckfläche miteinander zu verspannen. Werden die Querbohrungen als Schrägbohrungen ausgeführt, so können auch Verbinder in der Raumdiagonale, d.h. von einem Verbindungspunkt in der Grundfläche zu einem Verbindungspunkt der Deckfläche, welche nicht Teil des gleichen Fachwerks ist, verbunden werden. Auch hier ist es bevorzugt, die Verbindungsbolzen drehbar in den Verbindungselementen aufzunehmen, damit das aus bevorzugt skalierbaren Fachwerken aufgebaute dreidimensionale Offshore-Fachwerkstruktur-Modul ebenfalls skalierbar ist.

Im Falle, dass aus den erfindungsgemäßen Fachwerken eine Fachwerkstruktur von der Form eines Vieleck-Prismas aufgebaut wird, kann im Mittelpunkt der Grund- oder Deckfläche oder des Raumvolumens ein aus Verbindungselementen aufgebautes Mittenelement angeordnet sein. Das Mittenelement ist über Verbinder mit den Verbindungselementen, die in den Ecken der Grund- und/oder Deckfläche angeordnet sind, verbunden. Dies hat den Vorteil, dass eine Vielzahl von Verbindungselementen über Verbinder mit dem einen Mittenelement verbunden werden können, was zu einer besonders guten Versteifung der erfindungsgemäßen Fachwerkstruktur führt und eine flexible Anordbarkeit der Fachwerke zulässt, z.B. in einer Art Sternform.

Mittels des erfindungsgemäßen Verbindens erfindungsgemäßer Fachwerke entstehen somit gerade Dreiecks-Prismen oder gerade Vierecks-Prismen oder gerade Vieleck- oder Stern- Prismen, welche ein Offshore-Fachwerkstruktur-Modul einer flächenhaft ausgedehnten Tragwerkstruktur bilden können. Mit diesen dreidimensionalen Dreieck-, Quader- oder Vieleckstrukturen können dann je nach Anwendungsfall individuell gestaltete Tragwerksstrukturen aufgebaut werden, die Plattformen oder Abstütz- bzw. Unterstützungsvorrichtungen für erneuerbare Energien oder Wartungsplattformen oder auch für Windkraftanlagen oder Bohrinseln darstellen können. Selbstredend sind die erfindungsgemäßen Fachwerke auch in Tragstrukturen für Freizeitbadeplattformen oder als Equipment-oder Pausenplattformen für Tauchgänge vorstellbar. Das Einsatzgebiet erfindungsgemäßer Offshore-Tragwerkstrukturen ist hierauf jedoch nicht limitiert, sodass beispielsweise auch Fahrbrücken oder ähnliches vorstellbar sind.

Sollte der Eigenauftrieb der aus erfindungsgemäßen Fachwerken gebildeten Offshore-Tragwerkstrukturen für den jeweiligen Anwendungsfall nicht ausreichen, so können Schwimmkörper zusätzlich an, über oder unter den für den Auftrieb vorgesehenen ersten Riegeln befestigt werden. Hierzu ist beispielsweise vorstellbar, in Verlängerung der Pfosten entsprechende Aufnahmevorrichtungen für Haltestangen oder Halteösen für Schwimmkörper anzuordnen, mit dem die Fachwerkstrukturen an den jeweiligen Verbindungspunkten/Knotenpunkten unterstützbar sind. In einer bevorzugten Ausführungsform können somit beispielsweise an einer quaderförmigen Fachwerkstruktur vier Schwimmkörper an den jeweiligen vier Ecken der rechteckigen Grundfläche angeordnet werden, wobei auch eine höhere, beispielsweise durch vier teilbare Anzahl an Schwimmkörpern im Bereich des Möglichen ist. Die Vorrichtungen können selbstredend auch an einem oder an mehreren der Riegel installiert werden.

Analog können Haltestangen auch an den oberen Knoten- bzw. Eckpunkten der Fachwerkstruktur-Module befestigt werden, um daran weitere Strukturelemente für eine Haltevorrichtung zu befestigen. Solche Haltevorrichtungen, werden im Folgenden auch als Anbauteilehaltevorrichtungen bezeichnet, die beispielsweise zur Fixierung von Anbauteilen genutzt werden können, wie Solarpanelen, Masten, Windrädern, Kränen oder vergleichbaren Anbauten, die an der schwimmenden Offshore-Fachwerkstruktur installiert werden.

Erfindungsgemäß können ein oder mehrere Stützwerke in einer durch die zweiten Riegel aufgespannten Deckfläche und/oder in einer durch die ersten Riegel aufgespannten Bodenfläche und/oder in einer Zwischenebene zwischen der Deck- und der Bodenfläche angeordnet sein. Dabei sind die Stützwerke auf gegenüberliegenden ersten Riegeln oder zweiten Riegeln und/oder Verbindern derart abgestützt, dass Aufbauten, wie Plattformen, Photovoltaikmodule oder dergleichen, auf den Stützwerken abgestützt werden können. Durch die Stützwerke wird somit eine Möglichkeit bereitgestellt, die Fläche bzw. den Bereich zwischen den Riegeln nutzbar zu machen. Eine fachübliche Ausführung der Stützwerke, beispielsweise in der Form von an die Verteilung der abzustützenden Last angepassten Traversen, die auf die Riegel gelegt und dort befestigt werden, ist hierbei vom Erfindungsgedanken umfasst.

Die Stützwerke können des Weiteren schienenartige Fahrspuren aufweisen, auf denen schlitten- oder korbartige Transportmittel zwischen den Riegeln der Fachwerkstruktur bewegt werden können. Bevorzugt wird eine solche Konstruktion in der Deckfläche der erfindungsgemäßen Fachwerkstruktur eingesetzt, also bspw. zwischen den zweiten Riegeln, um die Fortbewegung von Personen oder den Transport von Werkzeug in der Deckfläche der Fachwerkstruktur zu ermöglichen.

In einer Ausführungsform der erfindungsgemäßen Fachwerkstruktur können die fluiddicht verschlossenen Hohlräume der ersten und/oder zweiten Riegel über Schläuche, die an Öffnungen in den Riegeln und/oder in den Verbindungselementen angeschlossen sind, miteinander verbunden werden, sodass ein Fluidleitungssystem entsteht. Mittels einer Pump- oder Saugvorrichtung kann in der Folge beispielsweise Kühlflüssigkeit durch das aus Riegeln und Schläuchen bestehende Leitungssystem gepumpt werden. Ein solcher Kühlflüssigkeitskreislauf kann beispielsweise dazu verwendet werden, um bspw. die Abwärme von Elektronikbauteilen, Photovoltaikmodulen oder anderen zu kühlenden Bauteilen, die in oder auf der Fachwerkstruktur angeordnet sind, aufzunehmen und zumindest über die in oder auf dem Wasser schwimmenden ersten Riegel an das Wasser, das als Wärmesenke fungiert, abzugeben bzw. abzuleiten. Maßnahmen zur Verbesserung der Wärmeübertragung, wie beispielsweise die Nutzung eines zusätzlichen Wärmetauschers zur Vergrößerung der Übertragungsfläche, liegen dabei im Bereich des fachmännischen Könnens.

Mit der erfindungsgemäßen Fachwerkstruktur kann weiter, wie oben bereits angedeutet, ebenfalls ein Wellenkraftwerk ausgebildet werden, indem in eine aus einer Vielzahl von Fachwerkstrukturen zusammengesetzte, flächenartige Tragstruktur gebildet wird. An den jeweiligen Seitenkanten der Offshore-Fachwerkstrukturmodule können dann Schwimmkörper beweglich derart aufgenommen werden, dass diese dem Wellendurchgang durch die Tragstruktur/Wellenkraftwerk in vertikaler Richtung folgen können. D.h. die einzelnen Schwimmkörper sind an beweglichen Hubstangen angeordnet, die zu den Pfosten parallel ausgerichtet sind und bewegen sich vertikal auf- und abwärts in einer oszillierenden Bewegung, je nachdem, ob sie sich gerade auf einem Wellenberg oder in einem Wellental befinden. Die an diesen Schwimmkörpern befestigte Hubstange überträgt diese oszillierende vertikale Bewegung beispielsweise auf Lineargeneratoren. Die Antriebswellen dieser Generatoren werden durch die oszillierenden Bewegungen in Drehung versetzt und können im Prinzip eines Dynamos elektrische Energie erzeugen, die über geeignete Mittel aufsummiert, gleichgerichtet und ggf. zwischengespeichert an Land übertragbar ist.

In einem vereinfachten dargestellten Ausführungsbeispiel, beispielsweise einer Fachwerkstruktur in Form eines geraden Dreiecks-Prisma, können so drei beweglich angeordnete Schwimmkörper eine derartige Auf- und Ab-Bewegung vollziehen. Modular hochskaliert ist es somit leicht nachvollziehbar, dass eine flächenhaft ausgebildete Struktur mit hundert oder mehr solchen Dreiecks-Fachwerkstrukturmodulen auch entsprechend viele bewegliche Schwimmkörper zur Energieumwandlung bereitstellen kann, wodurch ein Wellenkraftwerk ausgebildet wird.

Stellt man sich eine quadratische Flächenstruktur mit einer Kantenlänge von hundert Meter oder mehr vor, die aus erfindungsgemäßen Fachwerk mit einer Riegellänge von beispielsweise 10m aufgebaut ist - also beispielsweise 10x10 quaderförmige Fachwerkstruktur-Module - so ist leicht nachvollziehbar, dass eine solche flächenhaft ausgebildete Offshore-Tragstruktur relativ stabil auf einer Gewässeroberfläche schwimmt, während ein Welle durch eine solche ausgedehnte Tragstruktur hindurchläuft. Hierbei ist es weiterhin vorstellbar, dass die flächenhaft ausgedehnte Tragstruktur gewichtsmäßig so austariert ist, dass sie einerseits eine hohe Trägheit gegen Auslenkung durch die Wellen zeigt, und andererseits genügend Eigenauftrieb bereitstellt, damit die beweglich angeordneten Schwimmkörper rein durch die Wellenkraft ausgelenkt werden und keine Auftriebskraft für das Halten der Tragstruktur aufbringen müssen.

Erfindungsgemäß weist ein Verfahren zum Verbinden zumindest zweier Fachwerke die folgenden Schritte auf:
In einem ersten Schritt a) werden die erfindungsgemäßen Fachwerke flach schwimmend auf der Wasseroberfläche eines Gewässers, dessen Wassertiefe zumindest dem Abstand der ersten Regel zu den jeweils zweiten Regeln entspricht, angeordnet. Sowohl die ersten Riegel als auch die zweiten Riegel sind schwimmfähig ausgeführt, weshalb das Fachwerk auf der Wasseroberfläche schwimmt und parallel zu dieser ausgerichtet ist.

In einem nächsten Schritt b) wird das Auftriebs-Gewichts-Verhältnis der ersten Riegel soweit verringert, dass die ersten Riegel unter die Wasseroberfläche abtauchen können und die Fachwerke mit dem zweiten Riegel an der Wasseroberfläche schwimmend gehalten werden. Das Auftriebs-Gewichts-Verhältnis stellt dabei den Quotienten aus Auftrieb und Gewichtskraft dar. Es setzt also den Auftrieb, der von den ersten Riegeln bereitgestellt wird, in Relation zum Gewicht der ersten Riegel. Ein hohes Auftriebs-Gewichts-Verhältnis führt dazu, dass der erste Riegel deutlich mehr Auftrieb bereitstellt als er durch seine eigene Gewichtskraft benötigen würde, um auf einer Wasseroberfläche schwimmen zu können. Bei einem Auftriebs-Gewichts-Verhältnis von 1 stellt der erste Riegel genau so viel Auftrieb bereit, wie er zum Ausgleichen seiner eigenen Gewichtskraft und damit zum Schwimmen auf einer Wasseroberfläche benötigt. Bei einem Auftriebs-Gewichts-Verhältnis kleiner als 1 geht der erste Riegel unter. Das Auftriebs-Gewichts-Verhältnis der ersten Riegel wird in Schritt b) soweit verringert, dass die erfindungsgemäßen Fachwerke im Wesentlichen senkrecht zur Wasseroberfläche ausgerichtet schwimmfähig sind, wobei die zweiten Riegel weiterhin an oder auf der Wasseroberfläche schwimmen. Dieser Schritt b) wird für alle zu verbindenden Fachwerke ausgeführt, sodass die Fachwerke alle gleich orientiert im Wasser schwimmen, nämlich im Wesentlichen senkrecht zur Wasseroberfläche.

In einem weiteren Schritt c) wird je ein Verbindungselement, das an den zweiten Riegeln von jeweils zwei zu verbindenden Fachwerke angeordnet ist, so miteinander verbunden, dass ein erster Knotenpunkt am oberen Ende der Pfosten an der Wasseroberfläche entsteht, und über den die beiden Fachwerke aneinander fixiert sind.

Da dieser Zustand nach Schritt c), im Speziellen die Lage der beiden Fachwerke zueinander, nur durch die Fixierung am ersten Knotenpunkt festgelegt ist, werden in einem folgenden Schritt d) Stabilisierungsvorrichtungen an die verbundenen Fachwerke angebracht, sodass die benachbarten Pfosten der beiden Fachwerke im Wesentlichen parallel zueinander gehalten werden. Somit wird verhindert, dass die beiden Fachwerke, bzw. die beiden benachbarten Pfosten der Fachwerke im weiteren Verlaufe des Verfahrens ihre relative Lage zueinander ändern oder auseinander driften, was beispielsweise zu einer Beschädigung der Verbindungselemente, die den ersten Knotenpunkt bilden, führen könnte.

Nachdem die Lage der zu verbindenden Fachwerke zueinander arretiert ist, wird in einem darauffolgenden Schritt e) das Auftriebs-Gewichts-Verhältnis der ersten Riegel erhöht, sodass die Fachwerke aufsteigen, wobei sie ihre Orientierung zueinander beibehalten, bis die ersten Riegel knapp unterhalb, an oder auf der Wasseroberfläche schwimmen. Die zu verbindenden Fachwerke sind hierbei weiterhin im Wesentlichen senkrecht zur Wasseroberfläche ausgerichtet, wobei zumindest die relative Lage der beiden benachbarten Pfosten stabilisiert ist.

In einem abschließenden Schritt f) werden nun die jeweils an den benachbarten ersten Riegeln angeordneten Verbindungselemente miteinander verbunden. Dies ergibt einen zweiten Knotenpunkt am unteren Ende der Pfosten, an dem die beiden Fachwerke zusammengehalten werden.

Das Resultat des erfindungsgemäßen Verfahrens ist also eine aus der Draufsicht winkel-förmige Offshore-Fachwerkstruktur aus zwei Fachwerken, die nun an eine bereits bestehende Offshore-Fachwerkstruktur gemäß der Erfindung angebunden werden kann oder den Grundstein für den Aufbau einer Offshore-Fachwerkstruktur gemäß der Erfindung darstellen kann.

Zum Verringern des Auftriebs-Gewichts-Verhältnisses der ersten Riegel gemäß Schritt b) können erfindungsgemäß Beschwerungsmittel demontierbar an die ersten Riegel derart angebracht werden, dass sie wieder entfernbar sind. Alternativ kann ein Schlauch oder Schnorchel an- oder eingesetzt werden, mit dem Wasser in den ersten Riegel eingeleitet wird. Wie bereits vorher ausgeführt, kann die Öffnung, an die der Schlauch angesetzt wird, sowohl im ersten Riegel selbst als auch im an den ersten Riegel angebundenen Verbindungselement vorgesehen sein.

Erfindungsgemäß können sowohl Beschwerungsmittel als auch ein Schlauch eingesetzt werden, wenn beispielsweise eine besonders schnelle Veränderung des Auftriebs-Gewichts-Verhältnisses erwünscht wird. Zum Erhöhen des Auftriebs-Gewichts-Verhältnisses der ersten Riegel werden entweder die Beschwerungsmittel entfernt und/oder Auftriebsmittel angebracht und/oder unter Verwendung beispielsweise eines Druckluftaggregats oder unter Verwendung einer Pumpe das Wasser aus dem Riegel wieder entfernt; Beispielsweise herausgeblasen, gepumpt oder gesaugt, und Luft oder ein anderes Gas in den Riegel eingebracht. Einem Fachmann ist hierbei eine Vielzahl von möglichen Lösungen geläufig, um das Wasser, das in den ersten Riegeln enthalten ist, aus diesen zu entfernen, bzw. durch Luft oder Gas zu ersetzen. Bei der Umsetzung der erfindungsgemäßen Lösung muss hierbei darauf geachtet werden, dass die Beschwerungsmittel bzw. der Schlauch auch dann noch zugänglich sind, wenn der erste Riegel unter der Wasseroberfläche angeordnet ist, weil beispielsweise das Auftriebs-Gewichts-Verhältnis des ersten Riegels im Rahmen der Montage einer erfindungsgemäßen Fachwerksstruktur verändert worden ist und der erste Riegel unter die Wasseroberfläche abgesenkt worden ist.

Erfindungsgemäß können auch mehr als zwei senkrecht im Wasser schwimmende Fachwerke zu einer Fachwerkstruktur zusammengefasst werden, deren zweite Riegel an der Wasseroberfläche schwimmen und deren erste Riegel unter die Wasseroberfläche abgelassen wurden, bevor die Schritte e) und f) ausgeführt werden. Ein Fachmann wird die Anzahl der in den Schritten d) und e) zusammenzufügenden Fachwerke beispielsweise abhängig davon wählen, wie die Veränderung des Auftriebs-Gewichts-Verhältnisses der ersten Riegel ausgeführt wird, und wie groß die zu bildende Offshore-Fachwerkstruktur werden soll.

Im Rahmen der Montage können nach einem der Schritte b) bis f) Fixiermittel zwischen jeweils zwei Fachwerken derart angebracht werden, dass ein vorbestimmter, aus der Draufsicht betrachteter Winkel zwischen zwei Fachwerken konstant bleibt. Dieser vorbestimmte Winkel, der beim Aufbau einer Struktur mit rechtwinkliger Grundfläche bevorzugt aus der Draufsicht L-förmig, das heißt im Wesentlichen rechtwinklig, ausgebildet ist, ist durch Verbindung der Knotenpunkte alleine nicht festgelegt, solange die zu verbindenden Fachwerke keine in der Draufsicht geschlossene Kontur bilden, beispielsweise ein Dreieck oder ein Vieleck. Bevorzugt lassen diese Knotenpunkte nämlich einen Freiheitsgrad der Drehung um eine zu den Pfosten der Fachwerke parallele Achse zu. Im Rahmen der Montage kann es daher bevorzugt sein, den Winkel zwischen zwei Fachwerken konstant zu halten, da dann beispielsweise das Aneinanderfügen von mehreren erfindungsgemäßen Fachwerken oder Fachwerksstruktur-Unterbaugruppen erleichtert wird. Die Fixiermittel können als Zusatzbauteile zu den in Schritt d) angebrachten Stabilisierungsvorrichtungen ausgeführt sein, können aber auch als ein Bauteil eine Funktionseinheit mit den Stabilisierungsvorrichtungen bilden. Der Verwendung fachüblicher Lösungen sind hierbei keine Grenzen gesetzt.

Erfindungsgemäß bevorzugt sind die in Schritt d) angebrachten Stabilisierungsvorrichtungen derart an die Pfosten der beiden Fachwerke angebracht, dass sie in Längsrichtung der Pfosten verschieblich sind. Somit ist es möglich, die Stabilisierungsvorrichtung bereits dann an die Pfosten anzubringen, wenn die zweiten Riegel an oder auf der Wasseroberfläche schwimmen. Die Stabilisierungsvorrichtung kann dann bspw. entlang der Pfosten in Richtung Gewässerboden hinabsinken, wodurch die Hebelkräfte, die die Stabilisierungsvorrichtung zum Beibehalten des Kippwinkels zwischen den beiden Fachwerken bereitstellen muss, verringert werden. In einer anderen Ausführungsform kann die Stabilisierungsvorrichtung während des Aufsteigens der Fachwerke gemäß Schritt e) an den Pfosten entlang gleiten bzw. geführt werden.

Sofern Anbauteilehaltevorrichtungen zur Befestigung von Anbauteilen, wie beispielsweise Schwimmkörpern, Photovoltaikmodulen, Windrädern oder Plattformen, an den Pfosten und/oder den ersten Riegeln vorgesehen sind, werden diese bevorzugt oberhalb oder unterhalb der ersten Riegel und/oder an Verbindungselementen, die sich an den Enden der ersten Riegeln befinden, nach einem der Schritte b) bis f) montiert. In einer bevorzugten Ausführungsform des Verfahrens werden die nach Schritt f) miteinander verbundenen Fachwerke vor der Montage der Anbauteilehaltevorrichtung in flacheres Wasser verbracht, sodass die Anbauteilehaltevorrichtungen zumindest teilweise durch einen oder mehrere Monteure auf dem Boden stehend montiert werden können. Des Weiteren kann das Auftriebs-Gewichts-Verhältnis der Fachwerke und damit die Höhe, in der die Fachwerke über dem Wasser schwimmen, so verändert werden, dass die Anbauteile und Anbauteilehaltevorrichtungen in einer bequemen Arbeitshöhe montiert werden können.

Bevorzugt wird nach dem Erhöhen des Auftriebs-Gewichts-Verhältnisses in Schritt e) der Schlauch - sofern ein solcher verwendet worden ist - entfernt und die ersten Riegel, bzw. die Verbindungselemente, bzw. die entsprechenden Öffnungen, werden wasserdicht verschlossen.

Die so verbundenen erfindungsgemäßen Fachwerke können, nachdem sie auf der Ebene der ersten und auf der Ebene der zweiten Riegel miteinander verbunden worden sind, schwimmend mit zuvor verbundenen Fachwerden verbunden werden, bzw. zu einer schwimmenden Offshore-Fachwerkstruktur oder ähnlichen Vorrichtungen hinzugefügt werden.

Soweit stangenförmige Bauteile für Montagegruppen, wie Hubstangen, Masten, Kräne oder dergleichen in die erfindungsgemäß aufgebaute Offshore-Fachwerkstruktur integriert werden sollen, können diese auf einfache Art und Weise mit einem Ende von unterhalb der Wasseroberfläche mittels einer Zugvorrichtung durch den zwischen den Verbindungselementen aufgespannten Bereich entlang der Pfosten in eine im Wesentlichen senkrechte Position unter der Wasseroberfläche und im Wesentlichen parallel zu den Pfosten verbracht werden. Hierzu kann es bevorzugt sein, eine Kranvorrichtung beispielsweise in der Ebene der zweiten Riegel zu installieren, mittels welcher die stangenförmigen Bauteile dann von unterhalb der Wasseroberfläche nach oben gezogen werden.

Um den Auftrieb von nicht schwimmenden Bauteilen zu vergrößern, können an- und abmontierbare Schwimmhilfen oder Floßvorrichtungen verwendet werden, sodass die Bauteile auf oder an der Wasseroberfläche schwimmend transportiert und/oder montiert werden können. So kann es auch möglich sein, beim Aufbau einer großen zusammenhängenden Fachwerksstruktur aus einer Vielzahl von erfindungsgemäßen Fachwerken Bauteile in das Innere der Fachwerksstruktur, die für ein großes Transportschiff unzugänglich sind oder selbst durch große Kräne nicht erreicht werden können, mittels der Schwimmhilfen oder der Floßvorrichtungen zu verfrachten, um sie am Einsatzort an oder in die Fachwerkstruktur zu integrieren.

Hierfür können weiter an der Deckfläche, die durch die zweiten Riegel aufgespannt wird, Kranvorrichtungen befestigt werden, mittels derer Schwimmhilfen, Floßvorrichtungen, Anbauteilehaltevorrichtungen und/oder Anbauteile von der Wasseroberfläche auf die Deckfläche oder in eine Zwischenebene zwischen der Deckfläche und der Wasseroberfläche gehoben werden. So kann eine erfindungsgemäße Fachwerksstruktur Stück für Stück im Wesentlichen schwimmend im Gewässer mit geringem Aufwand aufgebaut werden, da die hierfür benötigten Bauteile unter Zuhilfenahme von Schwimmhilfen und Kränen an den Montageort gebracht werden, um dort die Fachwerksstruktur in örtlicher Nähe zu ihrem Einsatzort aufzubauen sowie die gewünschte Ausstattung einzubauen / zu installieren.

Das erfindungsgemäße Fachwerk als auch die erfindungsgemäßen modularen Fachwerkstrukturen sowie deren Zusammenbau zu flächig ausgedehnten Tragstrukturen werden im Folgenden anhand von Figuren beispielhaft anhand von bevorzugten Ausführungsformen dargestellt, wobei die Figuren, bzw. die dort gezeigten Ausführungsformen, den Erfindungsgedanken nicht einschränken. Es zeigen:
- Figur 1:: ein erfindungsgemäßes Fachwerk;
- Figur 2:: eine perspektivische Ansicht eines Verbindungselementes zum Aufbau eines erfindungsgemäßen Fachwerks;
- Figur 3:: ein Verbindungselement eines erfindungsgemäßen Fachwerks;
- Figur 4:: eine Ausführungsform zum Verbinden zweier Verbindungselemente benachbarter Fachwerke;
- Figur 5:: eine alternative Ausführungsform zum Verbinden zweier Verbindungselemente benachbarter Fachwerke;
- Figur 6:: eine perspektivische Ansicht eines Fachwerkstruktur-Moduls gemäß der Erfindung;
- Figur 7:: eine perspektivische Ansicht einer Tragstruktur aus einer Vielzahl von Fachwerkstruktur-Modulen;
- Figur 8:: eine perspektivische Ansicht einer weiteren Ausführungsform der modularen Fachwerkstruktur gemäß der Erfindung;
- Figur 9:: eine perspektivische Ansicht einer erfindungsgemäßen Offshore-Tragstruktur mit einer Vielzahl von erfindungsgemäßen Fachwerkstruktur-Modulen gemäß Figur 8;
- Figur 10:: eine schachbrettartige Fachwerkstruktur gemäß der Erfindung;
- Figur 11:: eine zweite schachbrettartige Fachwerkstruktur gemäß der Erfindung;
- Figur 12:: ein Fachwerkstruktur-Modul für ein Wellenkraftwerk;
- Figur 13:: zwei nach einem erfindungsgemäßen Verfahren verbundene Fachwerke;
- Figur 14:: ein aus einer Vielzahl von Fachwerkstruktur-Modulen zusammengesetztes Wellenkraftwerk in einer perspektivischen Ansicht;
- Figur 15:: ein aus einer Vielzahl von erfindungsgemäßen Fachwerkstruktur-Modulen zusammengesetztes erfindungsgemäßes Offshore-Tragwerk.

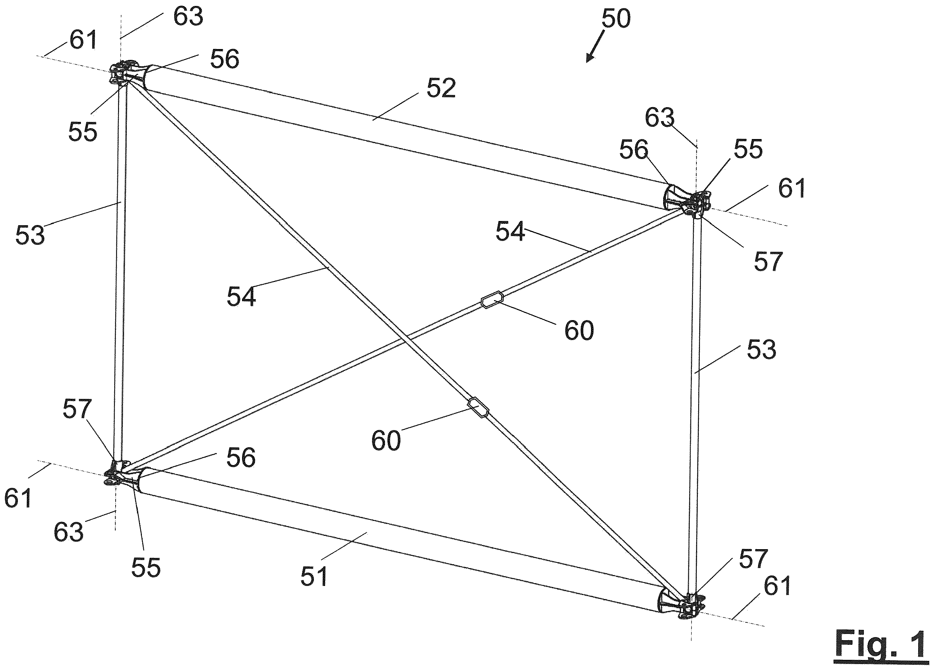

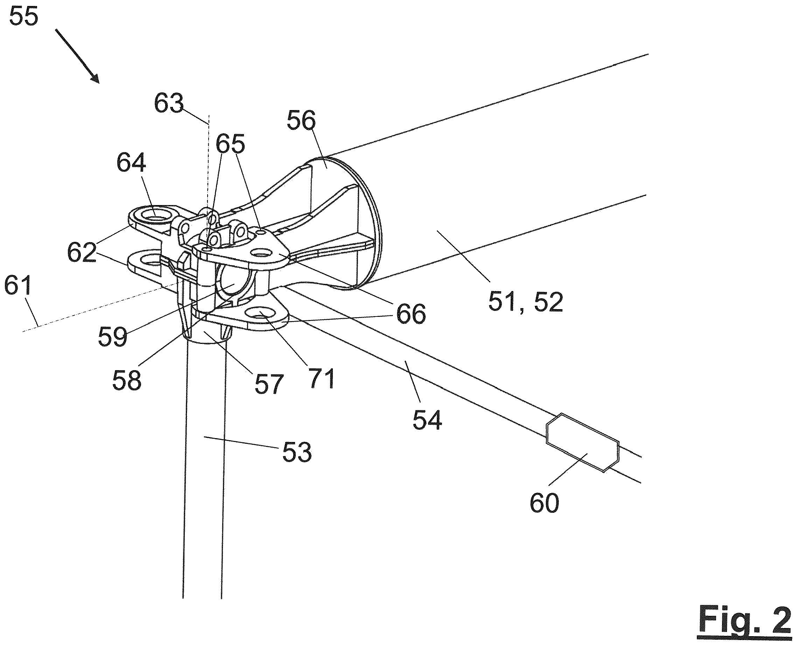

Figur 1 zeigt ein erfindungsgemäßes, schwimmfähiges Fachwerk 50 mit einem ersten Riegel 51 und einem dazu parallelen zweiten Riegel 52 mit ihren jeweiligen Längsachsen 61. Die beiden Riegel 51 & 52 werden über Pfosten 53 beabstandet gehalten, welche in Verbindungselementen 55 aufgenommen sind. Dabei stehen die Längsrichtungen 63 der Pfosten 53 senkrecht zur Längsrichtung 61 der Riegel 51 & 52. An jedem Ende der ersten Riegel 51 und der zweiten Riegel 52 ist je ein Verbindungselement 55 angeordnet, wobei die Verbindungselemente 55 über Bänder 54, die Spannvorrichtungen 60 aufweisen, miteinander verspannt sind. Damit entsteht ein stabiles Fachwerk 50, welches diagonal über die Bänder 54 verspannt ist. Die Bänder 54 sind in den Verbindungselementen 55 beispielsweise so eingehängt, dass sie in Richtung des Fachwerkzentrums arretiert sind. In einer weiter bevorzugten Ausführungsform sind die Bänder 54 in drehbaren Bolzen 59 (siehe Figur 2) mit Querbohrungen so aufgenommen, dass diese mit den Spannvorrichtungen 60 miteinander verbunden sind und das Fachwerk 50 diagonal verspannen können.

Das in Figur 1 gezeigte Fachwerk 50 weist für die beiden Riegel 51, 52 in etwa dieselben Durchmesser auf, was jedoch nicht zwingend ist, wie oben bereits beschrieben. Die seitlichen Pfosten 53 als auch die Bänder 54 können beispielsweise aus einem metallischen Werkstoff gefertigte Rohre oder Vollmaterialstangen sein. Wenn das Fachwerk 50 für den offshore Einsatz im Meer vorgesehen ist, sollte bei der Materialauswahl jedoch eine salzwasserbeständige Legierung gewählt werden. Dies gilt selbstredend auch für die Verbindungselemente 55.

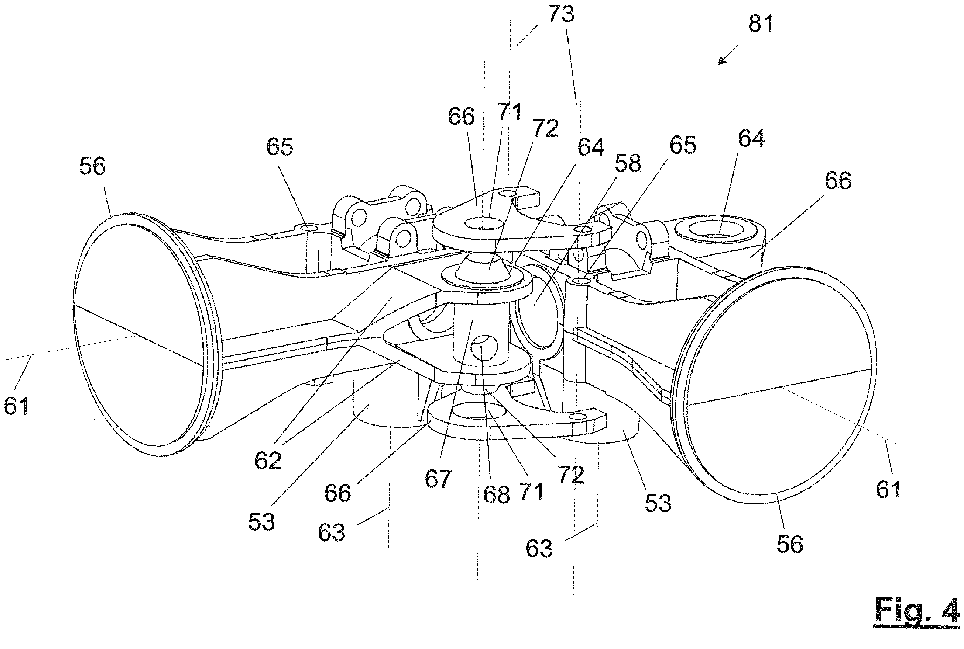

In Figur 2 ist eine Detailansicht eines Verbindungselements 55 des erfindungsgemäßen Fachwerks 50 gezeigt, hier erkennt man, dass die Pfosten 53 in Aufnahmen 57 der Verbindungselemente 55 aufgenommen sind und die Riegel 51 & 52 über Flansche 56 mit dem Verbindungselement 55 verbunden sind. Weiter erkennt man einen Bolzen 59, welcher in eine Bohrung 58 des Verbindungselementes 55 eingeschoben ist und welcher eine als Band ausgebildete Fachwerkstrebe 54 hält. Auf einer Seite des Verbindungselementes 55 erkennt man Fortsätze 62 mit einem darin ausgebildeten Verbindungsauge 64, in welches beispielsweise ein Verbindungsbolzen 67 (vgl. Figur 4) einsetzbar ist. Der Verbindungsbolzen 67 ist über Halterungen 66 (vgl. Figur 4) arretierbar, die auf der gegenüberliegenden Seite der Fortsätze 62 am Verbindungselement 55 an Anschraubpunkten 65 befestigt werden können.

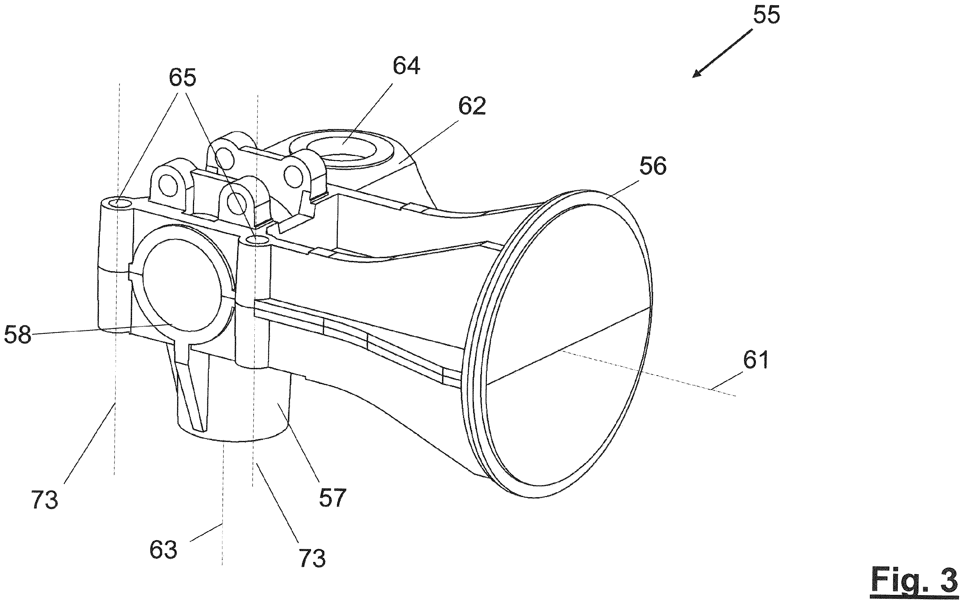

Figur 3 zeigt ein Verbindungselement 55, so wie es beispielsweise 4-mal je Fachwerk bei der Montage eines einzelnen erfindungsgemäßen Fachwerks 50 verwendet wird. Auf der rechten Seite erkennt man den Flansch 56 für die ggf. fluiddichte Anbindung des Verbindungselements 55 an ein Ende eines ersten Riegels 51 oder eines zweiten Riegels 52 sowie die Aufnahme 57 zum Anbinden, bspw. mittels Ein- oder Durchstecken, eines Pfostens 53. Oberhalb der Aufnahme 57 ist eine Bohrung 58 gezeigt, in welcher der Bolzen 59 zur Halterung der Bänder 54 einsetzbar ist. Oberhalb der Bohrung 58 sind zwei Anschraubpunkte 65 gezeigt, an die Halterungen 66 (vgl. Figur 4) zum Fixieren eines Verbindungsbolzens angeschraubt werden können. Dabei können die Achsen 73 der Anschraubpunkte 65 zur Führung der Halterungen 66 dienen, damit beispielsweise ein im Verbindungsauge 64 eines benachbarten Verbindungselements 55 eines anderen Fachwerks 50 aufgenommener Verbindungsbolzen 67 (vgl. Figur 4) gefangen, zentriert und schlussendlich fixiert werden kann. Hierzu erkennt man auf der gegenüberliegenden Seite einen oberen Fortsatz 62 mit einem entsprechend darin ausgebildeten Verbindungsauge 64 zum Einsetzen eines Verbindungsbolzens 67 (hier nicht dargestellt; vgl. Figur 4).

Mit Figur 4 sind zwei Verbindungselemente 55 dargestellt und ein Ausführungsbeispiel zur Verbindung der beiden Verbindungselemente 55 zu einem Knoten 81. Eine solche Verbindungssituation entsteht beispielsweise, wenn zwei erfindungsgemäße Fachwerke 50 miteinander verbunden werden sollen, um ein Fachwerkstruktur-Modul 70 bzw. ein Offshore-Tragwerk 80 aufzubauen. In Figur 4 werden Halterungen 66 verwendet, die eine in etwa dreieckige Ausgestaltung aufweisen. Über eine Trichter-förmige Öffnung 71 kann ein Verbindungsbolzen 67, welcher konische Enden 72 aufweist, gefangen und arretiert werden. Hierzu können die Halterungen 66 beispielsweise über entlang der Achsen 73 der Anschraubpunkte 65 geführte Schraubbolzen (nicht gezeigt) nach und nach zusammengeführt werden. Damit können bei der Montage zweier erfindungsgemäßer Fachwerke 50 die beiden Halterungen 66 beispielsweise mit einem Abstand vorfixiert werden, der größer ist als die axiale Länge des Verbindungsbolzens 67. Der im Verbindungsauge 64 eingesetzte Verbindungsbolzen 67 wird zwischen die beiden Halterungen 66 gefangen, wenn die Halterungen 66 mit ihren aufeinander zu weisenden trichterförmigen Öffnungen 71 einander angenähert werden. Beim Annähern der beiden Halterung 66 fängt sich der Verbindungsbolzen 67 in den trichterförmigen Aufnahmen 71 der Halterungen 66 und wird dadurch gefangen, zentriert und final fixiert.

Weiter ist in Figur 4 eine Querbohrung 68 im Verbindungsbolzen 67 erkennbar, in die ein Verbinder 69 zum Verspannen eines Fachwerkstruktur-Moduls 70 einsetzbar ist. Diese Querbohrung 68 ist in Figur 4 in der Ebene ausgerichtet, die durch die Längsrichtungen 61 der Riegel 51, 52 aufgespannt wird, was, wie oben bereits ausgeführt, auch schräg dazu erfolgen kann, falls eine Verspannung in Richtung der Raumdiagonalen eines Fachwerkmoduls 70 erfolgen soll.

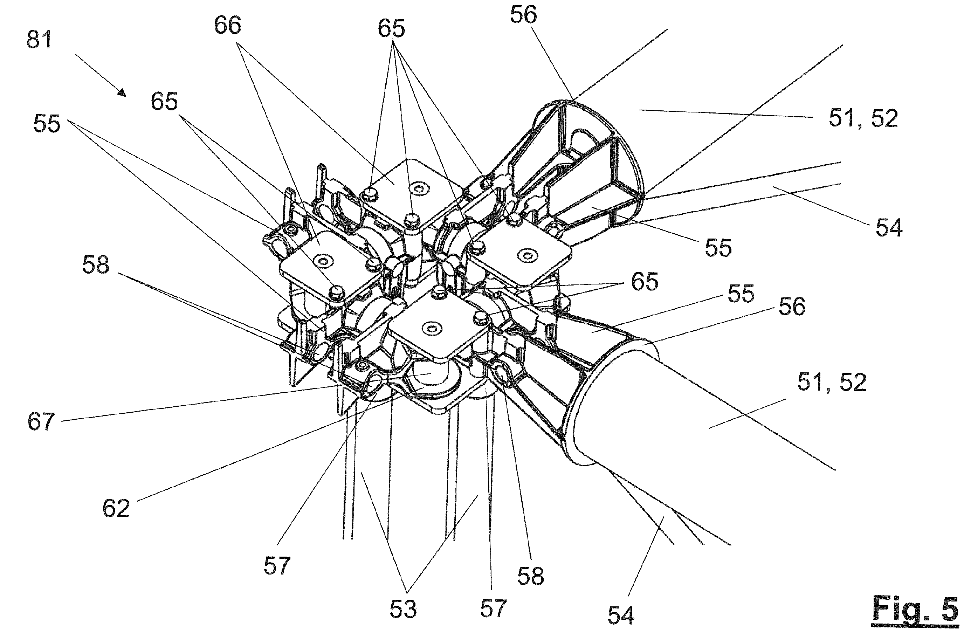

Figur 5 zeigt eine Alternative zu der in Figur 4 dargestellten Ausführungsform eines Knotens 81. Der Knoten 81 weist zwei Verbindungselemente 55 auf, die jeweils einen Flansch 56 aufweisen, an den Riegel 51, 52 angefügt sind. Die beiden Verbindungselemente 55 sind mittels der Halterungen 66 und der Fortsätze 62 miteinander verbunden. Hierbei fixieren Halterungen 66 in Verbindung mit Fortsätzen 62 Verbindungsbolzen 67 sowohl in axialer als auch in radialer Richtung. Diese Verbindungsbolzen 67 können Aufnahmen, wie zum Beispiel Querbohrungen 68 für weitere Bauteile, aufweisen. In der hier gezeigten Ausgestaltung weisen die Halterungen 66 aus der Draufsicht gesehen bspw. eine nahezu quadratische Form auf. Allerdings wird der Fachmann generell im Rahmen einer fachgerechten Konstruktion der Halterungen 66, wie bei den übrigen Bauteilen auch, seine Gestaltungsfreiheit nutzen, um die erfindungsgemäß benötigten Bauteile an die spezifischen Anforderungen, bspw. vor Ort, anzupassen.

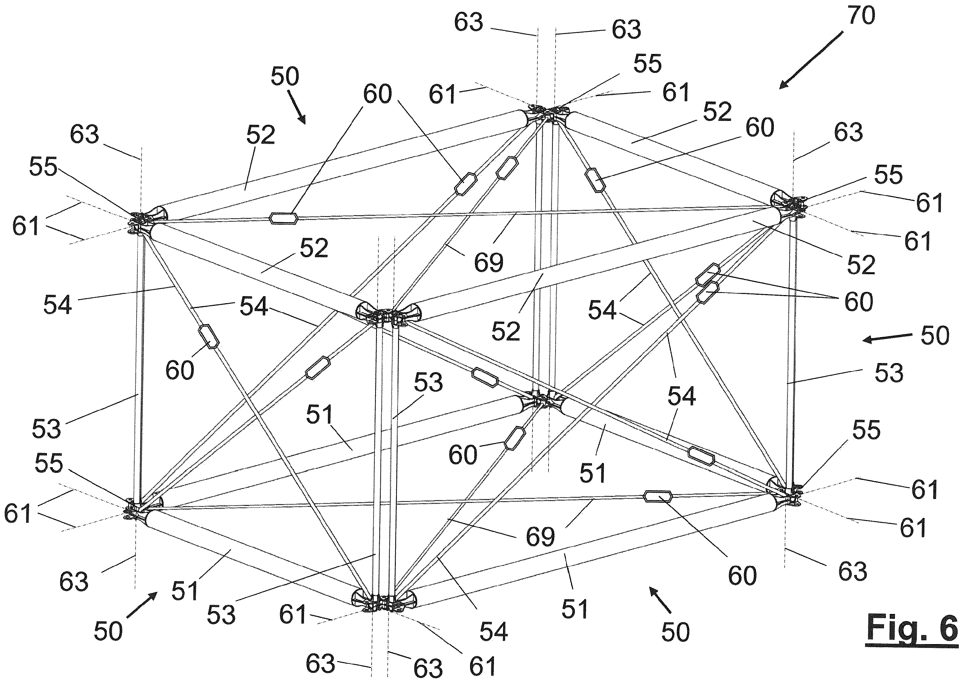

Die Verbindungselemente 55 stellen des Weiteren Aufnahmen 57 für die Pfosten 53 sowie Bohrungen 58, in die Bolzen 59 einsetzbar sind, bereit. Der Knoten 81 weist zudem zwei weitere Verbindungselemente 55 auf, die sich durch eine vereinfachte Form auszeichnen, da sie keine Flansche 56 aufweisen. Diese zusätzlichen Verbindungselemente 55 können beispielsweise der Aufnahme von Anbauteilehaltevorrichtungen 96 dienen. Der Knoten 81 stellt bspw. einen Eck-Knoten 82 eines erfindungsgemäßen Tragwerks 80 dar, bei dem die freibleibenden Verbindungselemente 55, an die keine Riegel 51, 52 angebunden werden, einfacher ausgeführt werden können, um beispielsweise Material und damit Kosten bei der Produktion einzusparen. Jedoch können mittels dieser zusätzlichen Verbindungselemente 55 auch zusätzliche Pfosten 53 parallel zu den Pfosten 53 der Fachwerke 50 arretiert werden, um so in den Eckpunkten bzw. Eckkanten hinsichtlich der Pfosten 53 dieselbe Funktionalität bereitstellen zu können, wie das zwischen innen im Tragwerk 80 angeordneten Knoten 84 möglich ist. Diese zusätzlichen Verbindungselemente 55 lassen sich analog auch auf die T-Knotenpunkte 83 übertragen. Figur 6 zeigt ein Fachwerkstruktur-Modul 70, oder auch Fachwerkmodul 70 genannt, welches aus vier erfindungsgemäßen Fachwerken 50 aufgebaut ist. Hierbei bilden die jeweils ersten Riegel 51 eine im Wesentlichen rechteckige Grundfläche. Die durch die zweiten Riegel 52 im Wesentlichen rechteckig aufgespannte Deckfläche wird durch jeweils zwei Pfosten 53 an den jeweiligen Seitenkanten parallel beabstandet gestützt. Über Bänder 54, die an den "Außenflächen" des jeweiligen Fachwerks 50 abgestützt sind, werden die erfindungsgemäßen Fachwerke 50 verspannt. Über die Verbindung der Verbindungselemente 55, wie beispielsweise in Figur 4 dargestellt, werden die einzelnen Fachwerke 50 zusammengehalten und über Verbinder 69, die diagonal in der Grundfläche bzw. Deckfläche laufen, verspannt. Die einzelnen Verbinder 69 als auch die Bänder 54 weisen jeweils Spannvorrichtungen 60 bspw. zum Verbinden und Spannen der Verbinder 69 und der Bänder 54 auf.

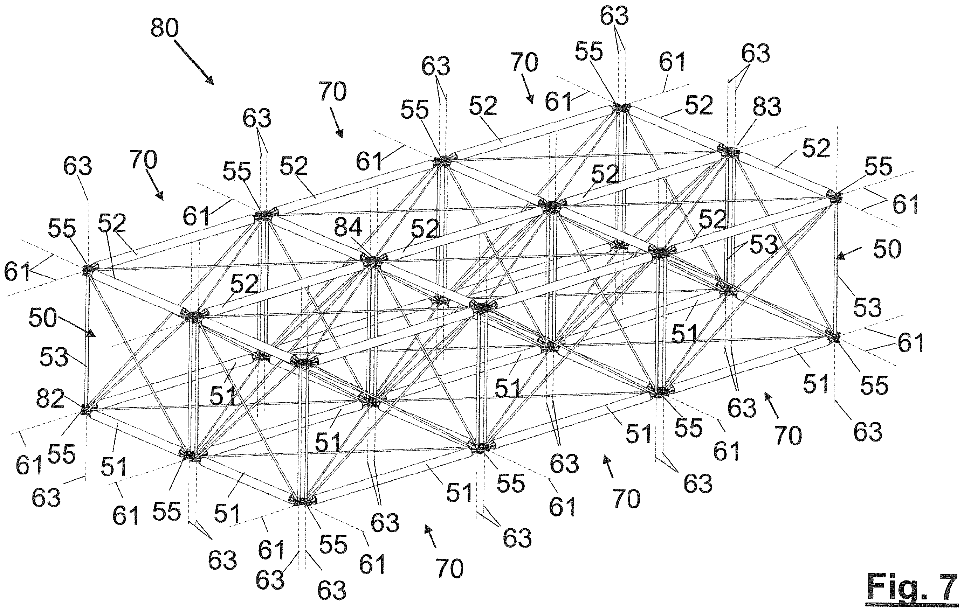

Figur 7 zeigt ein flächig aufgebautes Offshore-Tragwerk 80, welches aus mehreren Fachwerkstruktur-Modulen 70 aufgebaut ist, wobei das erfindungsgemäße Fachwerk 50 die Basisbaugruppe bildet. Der Fachmann erkennt, dass in dem Ausführungsbeispiel der Figur 7 17 einzelne erfindungsgemäße Fachwerke miteinander verbunden sind, wobei in den gebildeten sechs Deckflächen und sechs Grundflächen jeweils Diagonalverstrebungen 69 zum weiteren Aussteifen des Tragwerks 80 angeordnet sind.

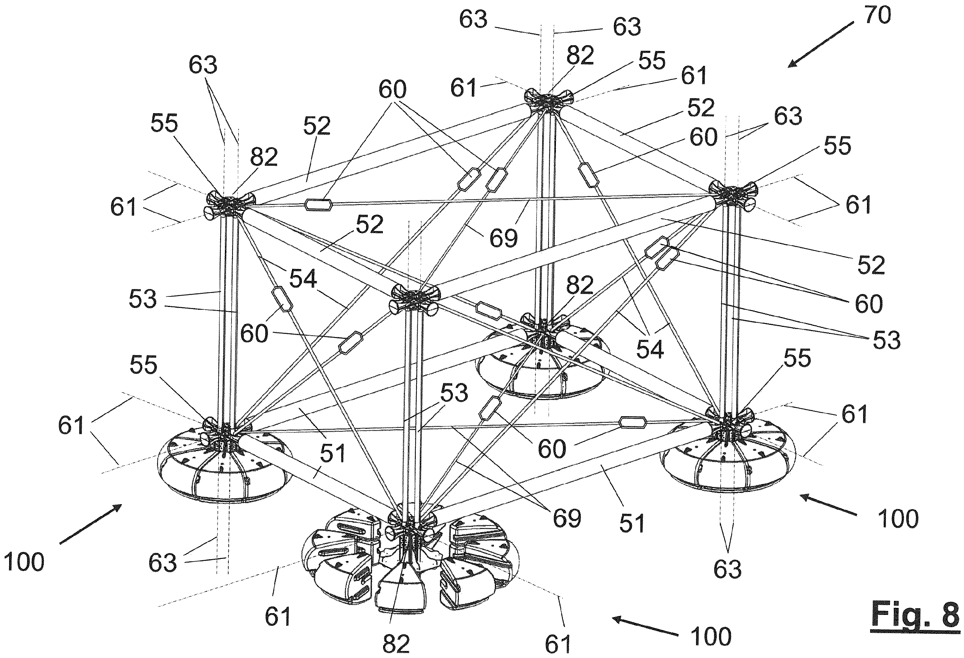

Figur 8 zeigt exemplarisch ein Fachwerkmodul 70, an dem an den ersten Riegeln 51 bzw. in Verlängerung der Pfosten 53 Schwimmkörper 100 angeordnet sind. Diese Schwimmkörper 100, die an den jeweiligen Verbindungspunkten der ersten Riegel 51 benachbarter Fachwerke 50 angeordnet sind, bestehen aus einzelnen Torus-segmentartigen Pontons, die einzeln für sich schwimmfähig sind. Diese Art des Aufbaus der Schwimmkörper 100 ist bevorzugt, um einerseits das Transportvolumen der Schwimmkörper zu reduzieren und andererseits eine niedrigere Ausfallwahrscheinlichkeit der Schwimmkörper 100 bereitzustellen. Sollte im Betrieb einer der torus-segmentartigen Pontons undicht werden, so kann dieser einzeln ausgetauscht werden und es muss nicht der Schwimmkörper 100 in seiner Gesamtheit getauscht werden. Ein weiterer Vorteil dieses segmentartigen Aufbaus besteht darin, dass das Gewicht und das Volumen der einzelnen Segmente sehr viel geringer ist als das Gesamtgewicht, bzw. das Gesamtvolumen der Schwimmkörper 100, was die Montage erleichtert.

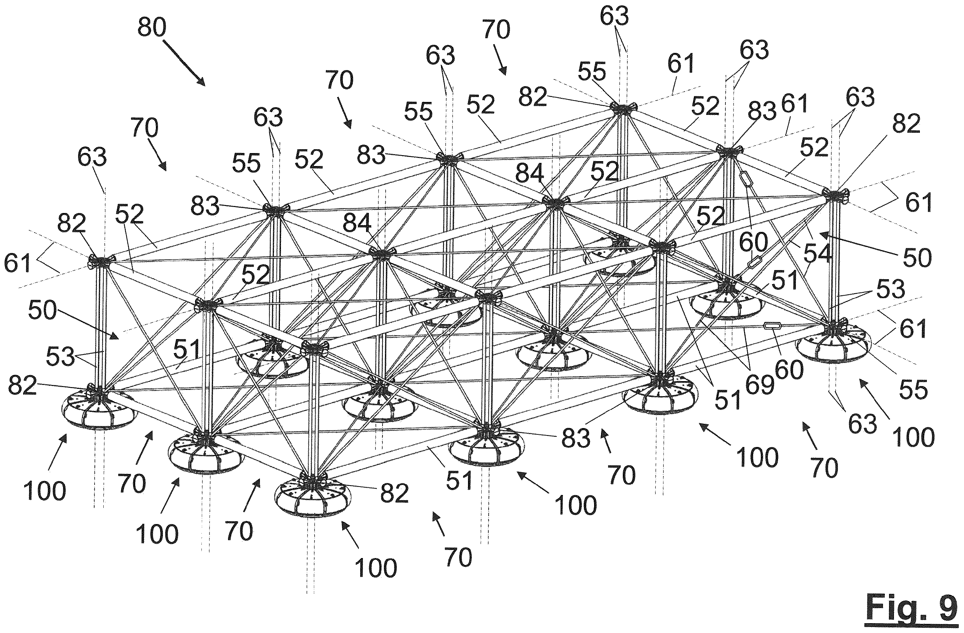

Figur 9 zeigt eine Offshore-Tragwerkstruktur 80, welche aus sechs Fachwerkstruktur-Modulen 70 gemäß Figur 8 aufgebaut ist. Dabei ist ebenfalls erkennbar, dass jedes Modul 70 aus vier erfindungsgemäßen Fachwerken 50 gebildet wird, wobei aneinandergrenzende Module ein gemeinsames Fachwerk 50 aufweisen. Charakteristisch hierfür sind die doppelten Pfosten 53 an den äußeren Seitenkanten der Tragwerkstruktur-Module 70. Die beiden inneren Knoten 84 weisen entsprechend vier vertikale Pfosten 53 auf. Die an den Seitenflächen T-Knoten 83 bildenden Verbindungen haben dementsprechend drei vertikale Pfosten 53.

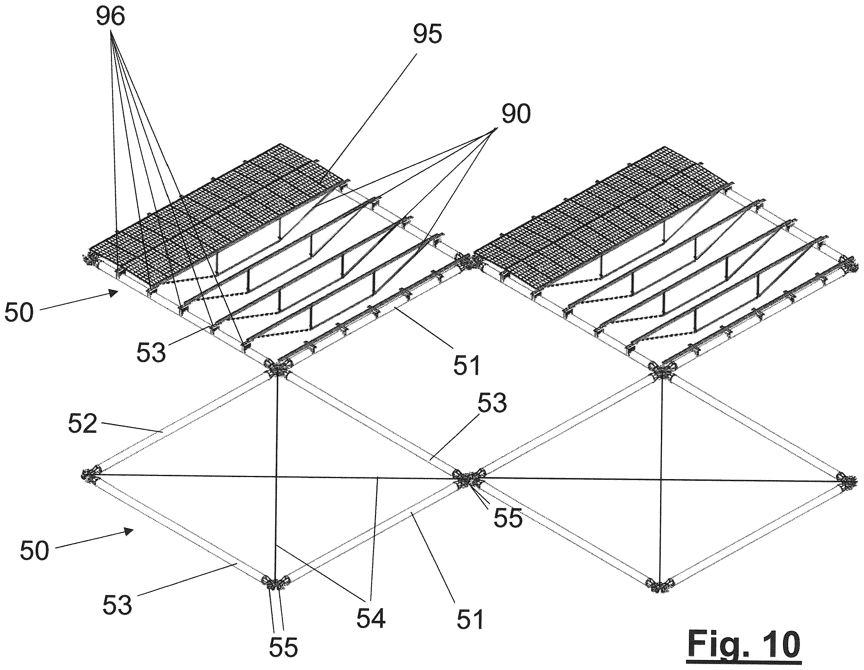

Figur 10 zeigt ein weiteres Ausführungsbeispiel einer erfindungsgemäßen Offshore-Tragwerks 80, das einen schachbrettartigen Aufbau zeigt, der sich im Wesentlichen flächig über eine Wasseroberfläche erstreckt. Auch ein solches schachbrettartiges Tragwerk 80 ist aus erfindungsgemäßen Fachwerken 50, die als Grundbausteine verwendet werden, aufgebaut. Bei diesen Fachwerken 50 können sowohl die ersten Riegel 51 als auch die zweiten Riegel 52 als auch die Pfosten 53 als Hohlkörper ausgeführt sein, die jeweils beispielsweise durch die Verbindungselemente 55 fluiddicht verschlossen sind. Somit kann ein einzelnes Fachwerk 50 liegend bzw. schwimmend auf einer Wasseroberfläche positioniert werden, wobei die Riegel 51, 52 und ggf. die Pfosten 53 mehr Auftrieb bereitstellen als durch die Gewichtskraft des erfindungsgemäßen Fachwerks 50 benötigt wird. Ein erfindungsgemäßes Fachwerk 50 ist hier bspw. durch drei weitere Fachwerke 50 erweitert, mit denen es über die Verbindungselemente 55, genauer gesagt über die Halterungen 66 und die Fortsätze 62 der Verbindungselemente 55, derart verbunden ist, dass ein schachbrettartiges Muster entsteht, bei dem Fachwerke 50 und "leere" Felder abwechselnd angeordnet sind. Zwei der dargestellten Fachwerke 50 weisen zusätzlich Stützwerke 90 auf, die sich an den Pfosten 53 bzw. in anderen Ausführungsformen zusätzlich oder alternativ an den Riegeln 51, 52 abstützen. Die Stützwerke 90 können beispielsweise der Aufständerung von Solarmodulen, Containern, Bodenplatten oder anderen Anbauteilen 95 dienen und/oder eine Fortbewegung über die erfindungsgemäße Fachwerkstruktur ermöglichen. Die hier gezeigten Stützwerke 90 sind speziell an die Belastungen, die bspw. durch Anbauteile 95, wie beispielsweise Solarpaneele, bzw. die Windlast hierauf, etc., hervorgerufen werden, angepasst. Das heißt, die Struktur der Stützwerke 90 ist so ausgestaltet ist, dass sie dort, wo die durch die Solarmodule hervorgerufenen Bauteilbelastungen am größten sind, am widerstandfähigsten ausgestaltet ist. Abhängig vom Einsatzfall ist auch eine andere Ausgestaltung der Stützwerke 90 vorstellbar. Die Stützwerke 90 können sich entweder direkt an den Riegeln 51, 52 und/oder an den Pfosten 53 abstützen oder durch Anbauteilehaltevorrichtungen 96 gehalten werden.

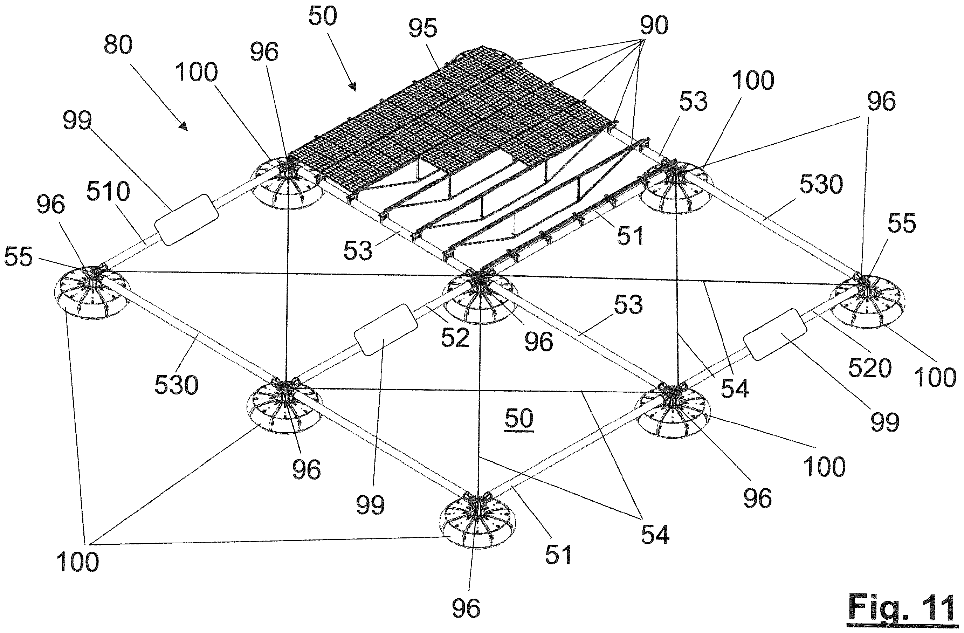

Um die Lage der vier in Figur 10 gezeigten erfindungsgemäßen Fachwerke 50 zueinander zu stabilisieren, können entweder Fixiermittel 92 (hier nicht gezeigt) verwendet werden oder einige der freien Verbindungselemente 55 mit weiteren Riegeln 510, 520 oder weiteren Pfosten 530 verbunden werden, sodass eine im Wesentlichen rechteckige Gesamtstruktur entsteht, die in sich verwindungssteif ist. Figur 11 zeigt ein solches Tragwerk 80 in einer quadratischen Ausführungsform basierend auf zwei erfindungsgemäßen Fachwerken 50, die mit weiteren mit erfindungsgemäßen Verbindungselementen 55 versehenen Riegeln 510, 520 oder Pfosten 530 erweitert sind. In dieser Ausführungsform können sowohl die ersten und zweiten Riegel 510, 520 als auch die Pfosten 530 Gleichteile sein, wodurch sie beliebig austauschbar sind. In anderen Ausführungsformen sind nur die zusätzlichen ersten und zweiten Riegel 510 & 520 untereinander baugleich und baugleich zu den ersten und zweiten Riegeln 51 & 52. Dabei können die Pfosten 53 & 530 untereinander ebenfalls baugleich sein, jedoch bspw. in Länge, Durchmesser oder Auftrieb von den ersten und zweiten Riegeln 51, 52, 510 & 520 abweichen. Der Auftrieb eines solchen schachbrettartigen Tragwerks 80 mit Erweiterung kann zusätzlich - wie in Figur 11 dargestellt - durch Schwimmkörper 100 erhöht werden.

Des Weiteren sind die zusätzlich einzeln eingebrachten, mit Verbindungselementen 55 versehenen Pfosten 530 und Riegel 510 & 520 durch Bänder 54 mit den erfindungsgemäßen Fachwerken 50 verbunden, um die Steifigkeit des Tragwerks 80 weiter zu erhöhen. Das Anbringen von Schwimmkörpern 100 unter dem Tragwerk 80 bzw. zwischen dem Tragwerk 80 und der Wasseroberfläche erhöht den Abstand von auf dem Tragwerk 80 angeordneten Anbauteilen 95 zur Wasseroberfläche, wodurch die Gefahr reduziert wird, dass die Anbauteile 95 bei Wellengang und/oder starken Windböen mit Wasser benetzt oder gar überflutet werden. An einigen Pfosten 53 bzw. Riegeln 51,52 sind zusätzlich Schwimmhilfen 99 befestigt, die den Auftrieb des Offshore-Tragwerks 80 weiter erhöhen. Diese Schwimmhilfen 99 können beispielsweise montierbar bzw. demontierbar ausgeführt sein.

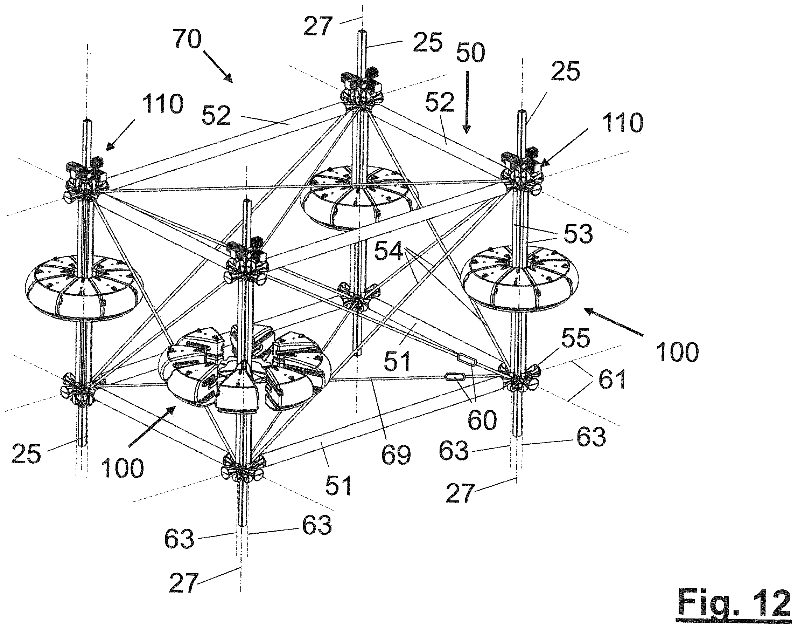

In Figur 12 ist ein quaderförmiges Fachwerkstruktur-Modul 70 gezeigt, das Teil eines Wellenkraftwerks bildet. Bei diesem exemplarisch gezeigten Modul 70 sind Schwimmkörper 100 zwischen den ersten Riegeln 51 und den zweiten Riegeln 52 der jeweiligen erfindungsgemäßen Fachwerke 50 angeordnet. Durch den segmentierten Aufbau der Schwimmköper 100 ist es möglich, den Schwimmkörper aus einzelnen Schwimmkörpersegmenten zusammenzusetzen und in das Fachwerkstruktur-Modul 70 zu integrieren, auch wenn das Fachwerkstruktur-Modul 70 bereits aufgebaut ist. Genauso können die Schwimmkörper 100 aber auch bereits zu Beginn des Montageprozesses am Fachwerkstruktur-Modul 70 angebracht werden, wenn es beispielsweise notwendig ist, zusätzlichen Auftrieb während des Montageprozesses zu generieren. Die Schwimmkörper 100 können dabei entlang der Pfosten 53 oszillieren und Hubstangen 25 linear auf und ab entlang einer Hubstangen-Längsachse 27 bewegen. Diese Hubstangen 25 sind mit Lineargeneratoren 110 derart verbunden, dass die lineare Hub-Bewegung der Hubstangen 25 in Rotationsbewegungen der Antriebswellen der Lineargeneratoren 110 umgesetzt wird, sodass über das Dynamoprinzip Wellenenergie in elektrische Energie umgewandelt werden kann.

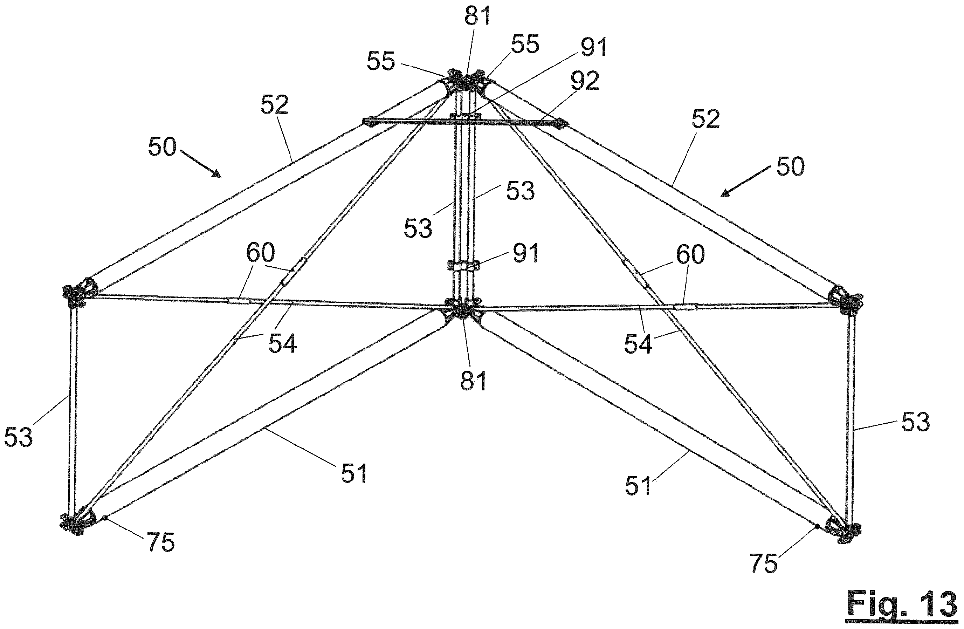

Figur 13 zeigt zwei Fachwerke 50, die über Halterungen 66 und Fortsätze 62 der an den Riegeln 51, 52 angeordneten Verbindungselemente 55 miteinander verbunden sind. Zum Verbinden der Fachwerke 50 wurde nach dem erfindungsgemäßen Verfahren vorgegangen. Dafür werden die beiden Fachwerke 50 zunächst liegend auf der Wasseroberfläche angeordnet. Nachdem das Gewicht der ersten Riegel 51 erhöht wurde, bzw. der Auftrieb der ersten Riegel 51 verringert wurde, schwimmen die Fachwerke 50 senkrecht zur Wasseroberfläche ausgerichtet im Wasser. Dabei befinden sich die schwimmfähigen zweiten Riegel 52 und die daran angeordneten Verbindungselemente weiterhin an oder oberhalb der Wasseroberfläche und sind somit gut zugänglich. Durch das Verbinden der beiden Verbindungselemente 55, die an den beiden zweiten Riegeln 52 angeordnet sind, zu einem oberen Knotenpunkt 81 entsteht eine aus der Draufsicht winklige Struktur.

Damit auch bei Offshore-Montage und Wellengang die beiden unterhalb des oberen Knotenpunkts 81 montierten Pfosten 53 ihre Relativlage zueinander beibehalten, wird zumindest eine Stabilisierungsvorrichtung 91 an den Fachwerken 50 angebracht, vorzugsweise direkt an die zu stabilisierenden Pfosten 53. Bevorzugt können diese Stabilisierungsvorrichtungen 91 an den Pfosten 53 entlanggleiten, sodass sie an der Wasseroberfläche montierbar sind, dann aber in Richtung Gewässergrund absinken, sodass der Hebelarm der stabilisierenden Haltemomente vergrößert wird, je weiter sich die Stabilisierungsvorrichtung dem unteren Knoten 81 annähert.

In einer weiteren Ausführungsform der Erfindung können Fixiermittel 92 zur vorübergehenden Arretierung des aus der Draufsicht betrachteten Winkels zwischen den Ebenen der Fachwerke 50 bereitgestellt werden. Diese Fixiermittel 92 werden bevorzugt zwischen den zweiten Riegeln 52, die von der Wasseroberfläche aus leicht zugänglich sind, montiert. So kann in einer einfachen Art und Weise verhindert werden, dass sich der aus der Draufsicht betrachtete Winkel zwischen den beiden Fachwerken 50 ändert. Hiermit wird die Positionierung einer erfindungsgemäßen Baugruppe aus zwei Fachwerken 50 gegenüber anderen Fachwerkstrukturbaugruppen oder Offshore-Tragwerken und damit die Montage ausgedehnter Fachwerkstrukturen wesentlich erleichtert.

Erfindungsgemäß wird das Verhältnis zwischen Auftrieb und Gewicht der ersten Riegel 51 in der Folge wieder erhöht, sodass die beiden an der Oberseite verbundenen Fachwerke 50 ihre Orientierung beibehaltend in Richtung Wasseroberfläche - also in etwa vertikal - aufsteigen, bis die ersten Riegel 51 an der Wasseroberfläche schwimmen. Da nun auch die Verbindungselemente 55 der ersten Riegel 51 leicht für Montagezwecke zugänglich sind, können die beiden Fachwerke in einfacher Art und Weise mittels der an den ersten Riegeln 51 angeordneten Verbindungselemente 55 an einem zweiten, unteren Knotenpunkt 81 verbunden werden. Durch die Stabilisierungsvorrichtungen 91 ist die Lage der Pfosten 53 zueinander bereits relativ genau festgelegt, d.h. die Pfosten 53 sind bereits parallel zueinander ausgerichtet. Ein aufwändiges Positionieren der an den ersten Riegeln 51 angeordneten Verbindungselemente 55 über große Distanzen kann somit entfallen. In diesem Verfahrensschritt wird daher nur eine Feinjustierung erforderlich sein.

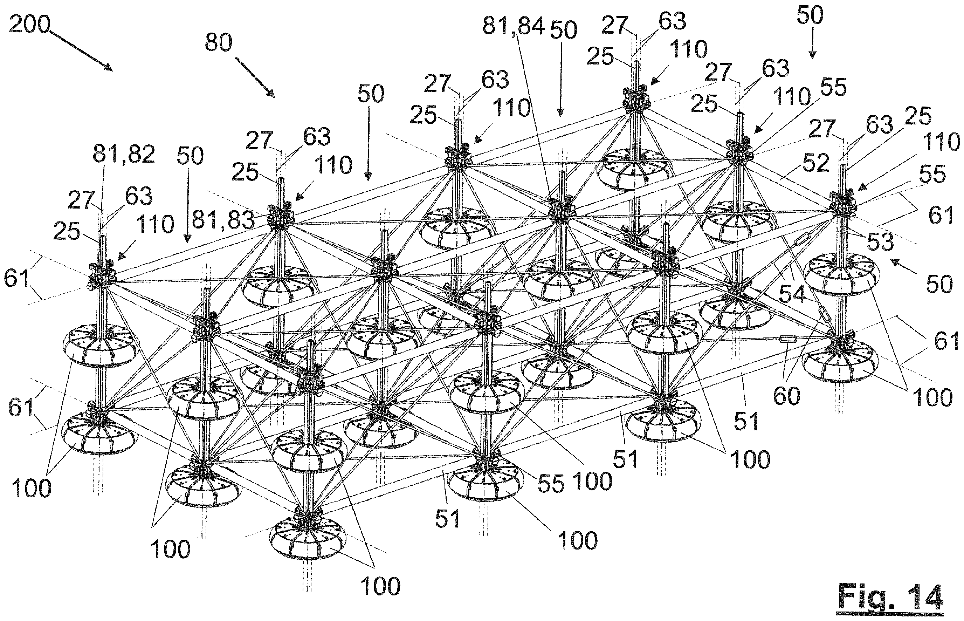

Selbstredend können an den unteren Enden des Offshore-Fachwerkstruktur-Moduls 70 gemäß Figur 12 unterhalb der ersten Riegel 51 weitere Schwimmkörper 100 angeordnet sein, so wie dies beispielsweise in Figur 14 dargestellt ist. Figur 14 zeigt ein Wellenkraftwerk 200, das aus sechs Fachwerkstruktur-Modulen 70 gemäß Figur 12 aufgebaut ist. Dabei sind die Fachwerke 50 der Fachwerkstruktur-Module 70, welche erfindungsgemäß selbst-schwimmend ausgebildet ist, mit zusätzlichen Schwimmkörpern 100 an den einzelnen Knotenpunkten 81 bis 84 versehen, um dem Wellenkraftwerk mehr Auftrieb zu verleihen.

Die zwischen den ersten Riegeln 51 und den zweiten Riegeln 52 angeordneten Schwimmkörper 100 können sich entsprechend eines Wellendurchgangs oszillierend entlang der Seitenstäbe 53 bewegen. Dadurch heben und senken sich die Hubstangen 25 und treiben die Wellen der Lineargeneratoren 110 zum Umwandeln von Wellenenergie in elektrische Energie an. Für einen Fachmann ist leicht nachvollziehbar, dass ein solches Wellenkraftwerk 200 ebenfalls in sehr viel größeren Dimensionen mit einer vielfachen Anzahl an beweglichen Schwimmkörpern 100 ausgebildet werden kann, wobei mit Zunahme der Flächenausdehnung des Wellenkraftwerks 200 die Selbst-Stabilisierung der Offshore-Fachwerkstruktur 70 bzw. des Tragwerks 80 zunimmt, womit eine Welle durch das Wellenkraftwerk 200 bzw. durch das Tragwerk 80 hindurch laufen kann, wobei die Gesamtstruktur der Wellenbewegung nicht folgt.

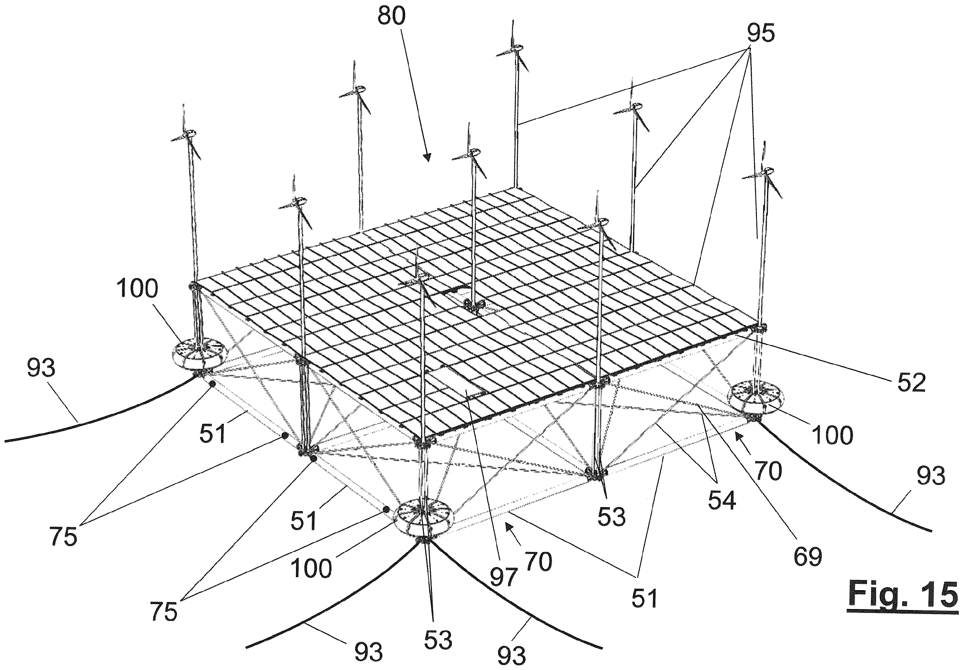

Figur 15 zeigt ein aus einer Vielzahl von Offshore-Tragwerkstruktur-Modulen 70 aufgebautes, schwimmendes Offshore-Tragwerk 80. Das Tragwerk 80 besteht aus vier Fachwerkstruktur-Modulen 70, die mittels der Verbindungselemente 55 zu einem Tragwerksverbund 80 zusammengefügt worden sind. An einigen Eckpunkten 82 der Fachwerk-Module 70 sind Schwimmkörper 100 beweglich angeordnet - bspw. gemäß der in Figur 12 gezeigten Ausführungsform - oder auch ortsfest mit der Tragstruktur 80, je nachdem ob mittels der Schwimmkörperbewegung Wellenenergie abgegriffen werden soll oder die Schwimmkörper lediglich den Auftrieb der Tragstruktur 80 erhöhen sollen. Das Offshore-Tragwerk 80 gemäß Figur 15 weist eine Vielzahl von regenerativen Energieerzeugern auf, beispielsweise Photovoltaik-Module, Windräder und auch Punktabsorber zur Umwandlung von Wellenenergie, die als Anbauteile 95 zum Teil beweglich am Offshore-Tragwerk 80 befestigt sind. Zusätzlich ist ein Schlitten 97 gezeigt, der als Transportmittel für Werkzeuge, Bauteile oder Personen, etc. auf der Fachwerkstruktur dient. Hierbei kann der schlittenartige Transportwagen 97 auf Schienen gleiten, die von den Stützwerken 90 bereitgestellt werden, wobei der Schlitten 97 bspw. über die Photovoltaikmodule hinweggleitet. Auch eine hängende, korbartige Anordnung, bspw. an den Stützwerken 90, bildet eine vorstellbare Ausführungsform. Eine derartige Offshore-Tragwerkstruktur 80 kann mittels eines Mooring-Systems 93 am Gewässerboden befestigt sein und somit als eine Art schwimmende Insel zur Energieerzeugung, -speicherung, -verteilung genutzt werden.

Mittels der Öffnungen 75 in den ersten Riegeln 51 und mittels Leitungen, die an die Öffnungen 75 angeschlossen werden können, können die durch die Verbindungselemente 55 verschlossenen Hohlräume der ersten und/oder zweiten Riegel 51, 52 miteinander fluidisch verbunden werden. So wird ein Fluidleitungssystem gebildet, in dem beispielsweise Kühlflüssigkeit zirkuliert werden kann. Durch eine solche Installation kann die Abwärme von zu kühlenden Anbauteilen 95, die in oder auf dem Offshore-Tragwerk 80 angeordnet sind, effizient an das Gewässer, auf dem das erfindungsgemäße Tragwerk 80 schwimmt, abgeleitet werden.

Insgesamt lässt sich mit dem erfindungsgemäßen schwimmfähigen Fachwerk 50 eine Vielzahl möglicher Tragstrukturen 70 oder Tragwerke 80 für eine Vielzahl verschiedenster offshore Anwendungen bereitstellen, wovon die gezeigte Anwendung für ein Wellenkraftwerk 200 nur ein Beispiel von vielen darstellt. Im Sinne der Erfindung können sämtliche erfindungsgemäßen Tragstrukturen 80 modular mit der Basisbaugruppe des erfindungsgemäßen Fachwerks 50 erweitert und somit vergrößert werden. Weiterhin ermöglicht die einfache Bauweise der Fachwerke 50 als auch der Tragstruktur-Module 70 sowie der modulare Aufbau der Schwimmkörper 100 eine einfache Montage gemäß der Erfindung, was später auch einen reduzierten Wartungsaufwand darstellt, da gegebenenfalls beschädigte Baugruppen einfach und modular ausgetauscht werden können.

### Bezugszeichenliste

| | | | |
|---|---|---|---|
| 25 | Hubstange | 90 | Stützwerke |
| 27 | Hubstangen-Längsachse | 91 | Stabilisierungsvorrichtung |
| | | 92 | Fixiermittel |
| 50 | Fachwerk | 93 | Mooring |
| 51, 510 | Erster Riegel | | |
| 52, 520 | Zweiter Riegel | 95 | Anbauteile |
| 53, 530 | Pfosten | 96 | Anbauteilehaltevorrichtung |
| 54 | Bänder | | |
| 55 | Verbindungselement | 97 | Transportmittel |
| 56 | Flansch | 99 | Schwimmhilfen |
| 57 | Aufnahmen | | |
| 58 | Bohrung | 100 | Schwimmkörper |
| 59 | Bolzen | | |
| 60 | Spannvorrichtung | 110 | Lineargenerator |
| 61 | Längsrichtung Riegel | | |
| 62 | Fortsätze | 200 | Wellenkraftwerk |
| 63 | Längsrichtung Pfosten | | |
| 64 | Verbindungsauge | | |
| 65 | Anschraubpunkt | | |
| 66 | Halterung | | |
| 67 | Verbindungsbolzen | | |
| 68 | Querbohrung | | |
| 69 | Verbinder | | |
| 70 | Fachwerkstruktur-Modul | | |
| 71 | Trichter-förmige Aufnahme | | |
| 72 | Konisches Ende | | |
| 73 | Achse Anschraubpunkte | | |
| 75 | Öffnung | | |
| 80 | Tragwerk | | |
| 81 | Knoten | | |
| 82 | Eck-Knoten | | |
| 83 | T-Knoten | | |
| 84 | Innerer Knoten | | |

## Patentansprüche

1. Fachwerk (50) zum modularen Aufbau einer Offshore-Fachwerkstruktur mit einem als Schwimmkörper funktionierenden ersten Riegel (51), einem zweiten Riegel (52), zwei Pfosten (53) zum im Wesentlichen parallelen Abstützen der Riegel (51, 52) und mit zwei Bändern (54) zum Verspannen des Fachwerks (50), wobei an den jeweiligen Enden der beiden Riegel (51, 52) je ein Verbindungselement (55) angeordnet ist, welches aufweist:
- einen einzigen Flansch (56) zum Anbinden nur eines Riegels (51, 52) in dessen Längsrichtung (61) an das Verbindungselement (55);
- Aufnahmen (57) zur Anbindung der Pfosten (53) an die Riegel (51, 52) quer zur Längsrichtung (61) der Riegel (51, 52);
- Befestigungsmittel (58) zum Befestigen der mit Spannvorrichtungen (60) versehenen Bändern (54), sodass das Fachwerk (50) mittels der Spannvorrichtungen (60) in Form gehalten, bzw. diagonal verspannt werden kann,
**dadurch gekennzeichnet, dass** die Verbindungselemente (55) bezüglich der Längsrichtung (61) der Riegel (51, 52) derart aufgebaut sind, dass auf einer Seite ein Fortsatz (62) ausgebildet ist und auf der gegenüberliegenden Seite eine Halterung (66) angeordnet werden kann, sodass der Fortsatz (62) eines Verbindungselements (55) eines Fachwerks (50) mit der Halterung (66) eines anderen Verbindungselements (55) eines weiteren Fachwerks (50) verbunden werden kann.

2. Fachwerk (50) nach Anspruch 1, bei dem der erste Riegel (51) und/oder der zweite Riegel (52) und/oder die Pfosten (53) einen runden Querschnitt aufweisen und/oder als Hohlkörper ausgebildet sind und/oder mit Auftriebskörpern versehen sind.

3. Fachwerk (50) nach einem der vorherigen Ansprüche, bei dem der Flansch (56) und die Enden der Riegel (51, 52) derart ausgestaltet sind, dass der Flansch (56) ein Ende des ersten Riegels (51) und/oder des zweiten Riegels (52) fluiddicht verschließt.

4. Fachwerk (50) nach einem der vorherigen Ansprüche, bei dem der zweite Riegel (52) und/oder die Pfosten (53) zusätzlich zum ersten Riegel (51) als Schwimmkörper fungieren.

5. Fachwerk (50) nach einem der vorherigen Ansprüche, bei dem in Verlängerung zumindest eines der Pfosten (53) oder parallel zur Ebene des Fachwerks (50) ein Schwimmkörper (100), ein Teil einer Aufständerung, bspw. für Solaranlagen oder Windkraftanlagen, oder ein Teil einer Halterung für eine Plattform oder einer Hebeeinrichtung angeordnet ist.

6. Fachwerk (50) nach einem der vorherigen Ansprüche, bei dem ein Auftriebs-Gewichts-Verhältnis zumindest des ersten Riegels (51) veränderlich ist, beispielsweise durch Flutungsmittel, mittels derer der erste Riegel (51) mit Wasser befüllt oder von Wasser entleert werden kann, oder durch Beschwerungsmittel, die entfernbar an den ersten Riegel (51) anbringbar sind und die das Gewicht und/oder den Auftrieb des ersten Riegels (51) erhöhen oder verringern, und bei dem der zweite Riegel (52) ebenfalls schwimmfähig ist.

7. Fachwerk (50) nach einem der Ansprüche 2 bis 6, bei dem der erste Riegel (51) als Hohlkörper ausgebildet ist und der erste Riegel (51) oder eines der daran angebrachten Verbindungselemente (55) eine Öffnung (75) aufweist, durch die zumindest der erste Riegel (51) mit Wasser befüllt oder entleert werden kann und die wasserdicht verschlossen werden kann.

8. Offshore-Tragwerk (80) gebildet aus zumindest zwei Fachwerken (50) gemäß einem der Ansprüche 2 bis 7, wobei die Fachwerke (50) im Wesentlichen auf der Wasseroberfläche schwimmend angeordnet sind und mittels der in den Ecken der Fachwerke (50) angeordneten Verbindungselemente (55) schachbrettartig zu einer entlang der Wasseroberfläche ausgedehnten Struktur verbunden sind.

9. Offshore-Tragwerk (80) gemäß Anspruch 8, wobei in den freien Feldern des schachbrettartigen Offshore-Tragwerks (80) an den Befestigungsmitteln (58) der Verbindungselemente (55) fixierbare, mit Spannvorrichtungen (60) versehene Bänder (54) derart gespannt werden können, dass die freien Felder mittels der Spannvorrichtungen (60) in Form gehalten, bzw. diagonal verspannt sind.

10. Offshore-Tragwerk (80) nach einem der Ansprüche 8 oder 9, wobei die Verbindungselemente (55), Teile der Verbindungselemente (55) oder Halterungen (66), die zwei Verbindungselemente (55) miteinander verbinden, elastisch deformierbar sind, wenn zwei benachbarte Fachwerke (50) eine Relativbewegung zueinander ausführen.

11. Fachwerkstruktur-Modul (70) gebildet aus drei, vier oder mehr Fachwerken (50) gemäß einem der Ansprüche 1 bis 7, die über die Verbindungselemente (55) zu einer geraden Dreiecks-, Rechteck- oder Vieleckeck-Prismenstruktur miteinander verbunden sind, wobei die als Schwimmkörper funktionierenden ersten Riegel (51) eine im Wesentlichen drei-, recht- oder vieleckige Grundfläche, die zweiten Riegel (52) eine im Wesentlichen drei-, recht- oder vieleckige zur Grundfläche kongruente Deckfläche aufspannen und zwei Pfosten (53) zweier benachbarter Fachwerke (50) jeweils eine Seitenkante bilden, wobei die Verbindungselemente (55) der jeweiligen Fachwerke (50) Befestigungsmittel aufweisen, woran mit Spannvorrichtungen (60) versehenen Verbinder (69) befestigbar sind, um zwei Fachwerke (50) des Fachwerkstruktur-Moduls (70) an nicht benachbarten Enden miteinander zu verbinden.

12. Fachwerkstruktur-Modul (70) nach Anspruch 11, bei dem die Verbinder (69) im Wesentlichen in der Grundflächen- und/oder Deckflächenebene und/oder entlang einer Raumdiagonalen verlaufen, und die Verbinder (69) bevorzugt in einer in den Verbindungsbolzen (67) eingebrachten Querbohrung (68) aufnehmbar sind, beispielsweise mittels an den Enden der Verbinder (69) ausgebildeten Einrastvorrichtungen.

13. Fachwerkstruktur-Modul (70) nach einem der Ansprüche 11 oder 12, das allein durch die Auftriebskraft der ersten Riegel (51) schwimmfähig ist.

14. Fachwerkstruktur-Modul (70) nach einem der Ansprüche 11 bis 13 bzw. Offshore-Tragwerk (80) nach einem der Ansprüche 8 bis 10, bei dem an einem der durch die Verbindungselemente (55) gebildeten Knotenpunkte (81, 82, 83, 84) und/oder an einem oder mehreren der ersten und zweiten Riegel (51, 52) ein oder mehrere Schwimmkörper (100), oder Aufständerungen, Anbauteilehaltevorrichtungen (96), Plattformen, Windräder, Kräne oder dergleichen befestigbar sind.

15. Fachwerkstruktur-Modul (70) nach einem der Ansprüche 11 bis 14, bei dem in einer durch die zweiten Riegel (52) aufgespannten Deckfläche und/oder in einer durch die ersten Riegel (51) aufgespannten Bodenfläche und/oder in einer Zwischenebene ein oder mehrere Stützwerke (90) angeordnet sind, wobei sich die Stützwerke (90) auf gegenüberliegenden ersten Riegeln (51) oder zweiten Riegeln (52) und/oder auf den Verbindern (69) abstützen, sodass Aufbauten wie Plattformen, Photovoltaikmodule oder dergleichen an den Stützwerken (90) abgestützt werden können.

16. Fachwerkstruktur-Modul (70) nach Anspruch 15, bei dem das oder die Stützwerke (90) schienenartige Fahrspuren aufweisen, mittels derer schlitten- oder korbartige Transportmittel (97) zwischen den ersten Riegeln (51) oder zweiten Riegeln (52) des Fachwerkstruktur-Moduls (70) bewegt werden können.

17. Fachwerkstruktur-Modul (70) nach einem der Ansprüche 11 bis 16, bei dem an einer oder mehreren der Seitenkanten zwischen den ersten Riegeln (51) und den zweiten Riegeln (52) ein Schwimmkörper (100) in vertikaler Richtung beweglich angeordnet ist.

18. Fachwerkstruktur-Modul (70) nach einem der Ansprüche 11 bis 17, das mehrere Fachwerke (50) gemäß Anspruch 7 aufweist und bei dem zumindest einige der fluiddicht verschlossenen Hohlkörper über die in den Riegeln (51, 52) oder den Verbindungselementen (55) eingebrachten Öffnungen (75) zu einem Fluidleitungssystem verbunden sind.

19. Modular aus einer Vielzahl von Fachwerkstruktur-Modulen (70) nach einem der Ansprüche 11 bis 18 aufgebautes, schwimmendes Offshore-Tragwerk (80) oder modular aufgebautes Offshore-Tragwerk (80) nach einem der Ansprüche 8 bis 10 zur schwimmenden Abstützung von Haltevorrichtungen, Plattformen, Aufbauten, Aufständerungen für Solaranlagen, Windkraftanlagen und dergleichen.

20. Wellenkraftwerk (200), das modular aus einer Vielzahl von Fachwerkstruktur-Modulen (70) nach einem der Ansprüche 14 bis 18 aufgebaut ist, wobei die zwischen den ersten Riegeln (51) und zweiten Riegeln (52) angeordneten Schwimmkörper (100) an beweglichen Hubstangen (25) angeordnet sind, die zu den Pfosten (53) parallel sind und mit Antriebswellen von Lineargeneratoren (110) derart wirkverbunden sind, dass oszillierende Bewegungen der Hubstangen (25) die Antriebswellen der Lineargeneratoren (110) in Drehung versetzen.

21. Verfahren zum Verbinden zumindest zweier Fachwerke (50) gemäß einem der Ansprüche 6 oder 7, aufweisend die Schritte:
a) Anordnen der Fachwerke (50) auf einer Wasseroberfläche eines Gewässers, dessen Wassertiefe zumindest dem Abstand der ersten Riegel (51) zu den jeweils zweiten Riegeln (52) entspricht;
b) Verringern des Auftriebs-Gewichts-Verhältnisses der ersten Riegel (51), sodass die ersten Riegel (51) unter die Wasseroberfläche abtauchen, bis die Fachwerke (50) im Wesentlichen senkrecht zur Wasseroberfläche ausgerichtet sind, wobei die zweiten Riegel (52) weiterhin an oder auf der Wasseroberfläche schwimmen;
c) Verbinden je eines Verbindungselementes (55) zweier zweiter Riegel (52) miteinander zum Verbinden zweier Fachwerke (50) an einem ersten Knotenpunkt (81);
d) Anbringen von zumindest einer Stabilisierungsvorrichtung (91) an die in Schritt c) verbundenen zwei Fachwerke (50), sodass die benachbarten Pfosten (53) der beiden Fachwerke (50) im Wesentlichen parallel zueinander gehalten werden;
e) Erhöhen des Auftriebs-Gewichts-Verhältnisses der ersten Riegel (51), sodass die Fachwerke (50) ihre Orientierung zueinander und im Wesentlichen senkrecht zur Wasseroberfläche beibehaltend aufsteigen, bis die ersten Riegel (51) an oder auf der Wasseroberfläche schwimmen;
f) Verbinden von jeweils an benachbarten ersten Riegeln (51) angeordneten Verbindungselemente (55) miteinander;

22. Verfahren nach Anspruch 21, bei dem zum Verringern des Auftriebs-Gewichts-Verhältnisses der ersten Riegel (51) Beschwerungsmittel an die ersten Riegel entfernbar angebracht werden oder ein Schlauch angesetzt wird, mittels welchem Wasser in den ersten Riegel eingeleitet wird, und bei dem zum Erhöhen des Auftriebs-Gewichts-Verhältnisses der ersten Riegel (51) entweder die Beschwerungsmittel entfernt werden und/oder das Wasser aus dem Riegel entfernt wird.

23. Verfahren nach Anspruch 21 oder 22, bei dem bevor die Schritte e) und f) ausgeführt werden, weitere Fachwerke (50) gemäß den Schritten c) und d) an zuvor verbundene Fachwerke (50) angebunden werden.

24. Verfahren nach einem der Ansprüche 21 bis 23, bei dem nach einem der Schritte b) bis f) Fixiermittel (92) zwischen jeweils zwei Fachwerken (50) derart angebracht werden, dass ein vorbestimmter Winkel zwischen den beiden Fachwerken (50) fixiert bleibt.

25. Verfahren nach einem der Ansprüche 21 bis 24, bei dem die in Schritt d) angebrachte Stabilisierungsvorrichtung (91) derart an die Pfosten (53) der beiden Fachwerke angebracht wird, dass sie in Längsrichtung der Pfosten (53) verschieblich ist.

26. Verfahren nach einem der Ansprüche 21 bis 25, bei dem die nach Schritt f) miteinander verbundenen Fachwerke (50) vor der Montage der Anbauteilehaltevorrichtungen (96) in flacheres Wasser verbracht werden, sodass die Anbauteilehaltevorrichtungen (96) zumindest teilweise durch einen oder mehrere Monteure auf dem Boden stehend montiert werden können.

27. Verfahren nach einem der Ansprüche 21 bis 26, bei dem nach Schritt e) der Schlauch entfernt und die ersten Riegel (51) wasserdicht verschlossen werden.

28. Verfahren nach einem der Ansprüche 21 bis 27, bei dem die verbundenen Fachwerke (50) schwimmend mit zuvor verbundenen Fachwerken (50), mit einem schwimmenden Fachwerkstruktur-Modul (70) nach einem der Ansprüche 11 bis 18, mit einem Offshore-Tragwerk nach Anspruch 8 bis 10 oder 19, oder mit einem Wellenkraftwerk (200) nach Anspruch 20 über Verbindungselemente (55) verbunden werden.

29. Verfahren nach Anspruch 28, bei dem stangenförmige Bauteile für Montagegruppen, wie Hubstangen, Masten oder dergleichen, mit einem Ende von unterhalb der Wasseroberfläche mittels einer Hebe- oder Zugvorrichtung durch den zwischen den Verbindungselementen (55) aufgespannten Bereich entlang der Pfosten (53) eines Fachwerkstruktur-Moduls (70) nach einem der Ansprüche 11 bis 18 in eine im Wesentlichen senkrechte Position parallel zu den Pfosten (53) verbracht werden.

30. Verfahren nach einem der Ansprüche 21 bis 29, wobei durch die zweiten Riegel (52) eine Deckfläche aufgespannt wird und Schwimmhilfen (99), Floßvorrichtungen, Anbauteilhaltevorrichtungen (96) und/oder Anbauteile (95) mittels mehrerer an oder zwischen den Verbindungselementen (55) der Deckfläche befestigten Kranvorrichtungen von der Wasseroberfläche auf die Deckfläche oder in eine Zwischenebene zwischen der Deckfläche und der Wasseroberfläche gehoben werden können.

## Claims

1. Framework (50) for the modular construction of an offshore framework structure comprising a first bar (51) functioning as a floating body, a second bar (52), two posts (53) for substantially parallel support of the bars (51, 52) and with two bands (54) for tensioning the framework (50), whereby at each end of the two bars (51, 52) a connection element (55) is arranged, which exhibits:
- a single flange (56) for connecting only one bar (51, 52) in its longitudinal direction (61) to the connection element (55);
- receiving areas (57) for joining the posts (53) to the bars (51, 52) transversely to the longitudinal direction (61) of the bars (51, 52);
- securing means (58) for fastening bands (54) provided with tensioning devices (60) so that the framework (50) can be held in shape respectively diagonally tensioned by means of the tensioning devices (60),
**characterized in that** the connection elements (55) are constructed with respect to the longitudinal direction (61) of the bars (51, 52) in such a way that an extension (62) is configured on one side and a holder (66) can be arranged on the opposite side so that the extension (62) of a connection element (55) of a framework (50) can be connected by means of the holder (66) of another connection element (55) of a further framework (50).

2. Framework (50) according to claim 1, in which the first bar (51) and/or the second bar (52) and/or the posts (53) have a round cross-section and/or are designed as hollow bodies and/or are provided with buoyancy bodies.

3. Framework (50) according to any one of the preceding claims, in which the flange (56) and the ends of the bars (51, 52) are configured such that the flange (56) seals one end of the first bar (51) and/or of the second bar (52) in a fluid-tight manner.

4. Framework (50) according to any one of the preceding claims, in which the second bar (52) and/or the posts (53) act as a floating body in addition to the first bar (51).

5. Framework (50) according to any one of the preceding claims, in which, in extension of at least one of the posts (53) or parallel to the plane of the framework (50), a floating body (100), a part of a mounting, for example for solar plants or wind turbines, or a part of a holder for a platform or a lifting device is arranged.

6. Framework (50) according to any one of the preceding claims, in which a buoyancy-to-weight ratio of at least the first bar (51) is variable, for example by flooding means by means of which the first bar (51) can be filled with water or emptied of water, or by weighting means dismountably attachable to the first bar (51), which increase or decrease the weight and/or buoyancy of the first bar (51), and in which the second bar (52) is also buoyant.

7. Framework (50) according to any one of Claims 2 to 6, in which the first bar (51) is formed as a hollow body and the first bar (51) or one of the connection elements (55) attached to it has an opening (75) through which at least the first bar (51) can be filled with water or emptied of water and which can be closed in a watertight manner.

8. Offshore load-bearing frame (80) formed of at least two frameworks (50) according to any one of Claims 2 to 7, in which the frameworks (50) are arranged to float substantially on the water surface and are connected in a chessboard-like manner to form a structure extending along the water surface by means of connection elements (55) arranged in the corners of the frameworks (50).

9. Offshore load-bearing frame (80) according to Claim 8, whereby bands (54), which can be fixed to the securing means (58) of the connection elements (55) and are provided with tensioning devices (60), can be tensioned in the free spaces of the chessboard-like offshore structure (80) in such a way that the free spaces are held in shape or are tensioned diagonally by means of the tensioning devices (60).

10. Offshore load-bearing frame (80) according to any one of Claims 8 or 9, whereby the connection elements (55), parts of the connection elements (55) or holders (66) connecting two connection elements (55) to each other are elastically deformable when two adjacent frameworks (50) undergo relative movement with respect to each other.

11. Framework structure module (70) formed from three, four or more frameworks (50) according to any one of Claims 1 to 7, which are joined via the connection elements (55) to form a straight triangular, rectangular or polygonal prismatic structure, whereby the first bars (51) functioning as floating bodies span a substantially triangular, rectangular or polygonal base surface, the second bars (52) span a substantially triangular, rectangular or polygonal top surface congruent with the base surface, and two posts (53) of two adjacent frameworks (50) each form a side edge, the connection elements (55) of the respective frameworks (50) exhibiting securing means to which connectors (69) provided with tensioning devices (60) can be fastened in order to join two frameworks (50) of the framework structure module (70) to one another at non-adjacent ends.

12. Framework structure module (70) according to Claim 11, in which the connectors (69) extend substantially in the base surface and/or top surface plane and/or along a space diagonal, and the connectors (69) are preferably receivable in a transverse borehole (68) formed in the connecting pin (67), for example by means of latching devices formed at the ends of the connectors (69).

13. Framework structure module (70) according to any one of Claims 11 or 12, which is buoyant solely due to the buoyant force of the first bars (51).

14. Framework structure module (70) according to any one of Claims 11 to 13 or an offshore load-bearing frame (80) according to any one of Claims 8 to 10, in which one or more floating bodies (100), or mountings, attachment holding devices (96), platforms, wind turbines, cranes or the like are attachable to one of the nodes (81, 82, 83, 84) formed by the connecting elements (55) and/or to one or more of the first and second bars (51, 52).

15. Framework structure module (70) according to any one of Claims 11 to 14, in which one or more support structures (90) are arranged in a top surface spanned by the second bars (52) and/or in a bottom surface spanned by the first bars (51) and/or in an intermediate plane, whereby the support structures (90) are supported on opposing first bars (51) or second bars (52) and/or on the connectors (69) in such a way that superstructures such as platforms, photovoltaic modules or the like can be supported on the support structures (90).

16. Framework structure module (70) according to Claim 15, in which one or more support structures (90) comprise rail-like tracks by means of which carriage-like or basket-like means of transport (97) can be moved between the first bars (51) or second bars (52) of the framework structure module (70).

17. Framework structure module (70) according to any one of Claims 11 to 16, in which a floating body (100) is movably arranged in the vertical direction at one or more of the side edges between the first bars (51) and the second bars (52).

18. Framework structure module (70) according to any one of Claims 11 to 17, comprising a plurality of frameworks (50) according to Claim 11, and in which at least some of the hollow bodies closed in a fluid-tight manner are connected to form a fluid conduit system via the openings (75) provided in the bars (51, 52) or the connection elements (55).

19. Floating offshore load-bearing frame (80) constructed in a modular manner from a plurality of framework structure modules (70) according to any one of Claims 11 to 18 or offshore load-bearing frame (80) constructed in a modular manner according to any one of Claims 8 to 10 for the buoyant support of holding devices, platforms, superstructures or mountings for solar installations, wind turbines and the like.

20. Wave power plant (200) which is constructed in a modular manner from a plurality of framework structure modules (70) according to any one of Claims 14 to 18, whereby the floating bodies (100) arranged between the first bars (51) and second bars (52) are arranged on movable lifting rods (25) which are parallel to the posts (53) and are operatively connected to the drive shafts of linear generators (110) in such a way that oscillating movements of the lifting rods (25) cause the drive shafts of the linear generators (110) to rotate.

21. Method for connecting at least two frameworks (50) according to any one of Claims 6 or 7, comprising the following steps:
a) arrangement of the frameworks (50) on a surface of a body of water, the depth of which corresponds at least to the distance between the first bars (51) and the respective second bars (52);
b) reduction of the buoyancy-to-weight ratio of the first bars (51) so that the first bars (51) submerge below the water surface until the frameworks (50) are substantially vertical to the water surface, whereby the second bars (52) continue to float at or on the water surface;
c) connection of one connection element (55) of each of two second bars (52) to each other in order to connect two frameworks (50) at a first node (81);
d) attachment of at least one stabilizing device (91) to the two frameworks (50) connected in step c) so that the adjacent posts (53) of the two frameworks (50) are held substantially parallel to each other;
e) increase of the buoyancy-to-weight ratio of the first bars (51) so that the frameworks (50) rise, maintaining their orientation to each other and being substantially vertical to the water surface until the first bars (51) are floating at or on the water surface;
f) connection of connection elements (55) to each other which are respectively arranged on adjacent first bars (51).

22. Method according to Claim 21, whereby in order to reduce the buoyancy-to-weight ratio of the first bars (51), weighting means are dismountably attached to the first bars or a hose is applied by means of which water is introduced into the first bar, and whereby, in order to increase the buoyancy ratio of the first bars (51), either the weighting means are removed and/or the water is removed from the bar.

23. Method according to Claim 21 or 22, whereby before steps e) and f) are carried out, further frameworks (50) are connected to previously connected frameworks (50) according to steps c) and d).

24. Method according to any one of Claims 21 to 23, whereby, after any one of steps b) to f), fixing means (92) are attached between two frameworks (50) such that a predetermined angle between the two frameworks (50) remains fixed.

25. Method according to any one of Claims 21 to 24, whereby the stabilizing device (91) attached in step d) is attached to the posts (53) of the two frameworks in such a way that it is movable in the longitudinal direction of the posts (53).

26. Method according to any one of Claims 21 to 25, whereby the frameworks (50) connected to each other after step f) are moved into shallower water prior to the mounting of the attachment holding devices (96) so that the attachment holding devices (96) can be at least partially assembled by one or more assemblers standing on the ground.

27. Method according to any one of Claims 21 to 26, whereby after step e) the hose is removed and the first bars (51) are closed in a watertight manner.

28. Method according to any one of Claims 21 to 27, whereby the connected frameworks (50) are connected in a floating manner to the previously connected frameworks (50), to a floating framework structure module (70) according to any one of Claims 11 to 18, to an offshore load-bearing frame according to Claim 8 to 10 or 19, or to a wave power plant (200) according to Claim 20 via connecting elements (55).

29. Method according to Claim 28, in which rod-shaped components for assembly units, such as lifting rods, masts or the like, are moved by one end from below the water surface by means of a lifting or pulling device through the area spanned between the connection elements (55) along the posts (53) of a framework structure module (70) according to any one of Claims 11 to 18 into a substantially vertical position parallel to the posts (53).

30. Method according to any one of Claim 21 to 29, whereby a top surface is spanned by the second bars (52) and the flotation aids (99), raft devices, attachment holding devices (96) and/or attachments (95) can be lifted from the water surface onto the top surface or into an intermediate plane between the top surface and the water surface by means of a plurality of crane devices attached to or between the connection elements (55) of the top surface.

## Revendications

1. Treillis (50) pour la construction modulaire d'une structure porteuse en treillis offshore dotée d'une première traverse (51) fonctionnant comme un flotteur, d'une deuxième traverse (52), de deux montants (53) pour soutenir les traverses (51, 52) de manière sensiblement parallèle et de deux bandes (54) pour tendre le treillis (50), un élément de liaison (55) étant disposé à chaque extrémité respective des deux traverses (51, 52), lequel présente :
- une seule bride (56) pour relier uniquement une traverse (51, 52) dans sa direction longitudinale (61) à l'élément de liaison (55) ;
- des logements (57) pour relier les montants (53) aux traverses (51, 52) transversalement à la direction longitudinale (61) des traverses (51, 52) ;
- des moyens de fixation (58) pour fixer les bandes (54) pourvues de dispositifs de serrage (60), de sorte que le treillis (50) peut être maintenu en forme, ou bien tendu en diagonale, au moyen des dispositifs de serrage (60),
**caractérisé en ce que** les éléments de liaison (55) sont assemblés, par rapport à la direction longitudinale (61) des traverses (51, 52), de sorte à former un prolongement (62) sur un côté et à pouvoir disposer un support (66) sur le côté opposé, de telle sorte que le prolongement (62) d'un élément de liaison (55) d'un treillis (50) peut être relié au support (66) d'un autre élément de liaison (55) d'un autre treillis (50).

2. Treillis (50) selon la revendication 1, dans lequel la première traverse (51) et/ou la deuxième traverse (52) et/ou les montants (53) présentent une section transversale ronde et/ou sont conçus comme des corps creux et/ou sont pourvus de corps de flottabilité.

3. Treillis (50) selon l'une des revendications précédentes, dans lequel la bride (56) et les extrémités des traverses (51, 52) sont conçues de telle sorte que la bride (56) obture de manière étanche aux fluides une extrémité de la première traverse (51) et/ou de la deuxième traverse (52).

4. Treillis (50) selon l'une des revendications précédentes, dans lequel la deuxième traverse (52) et/ou les montants (53) font office de flotteurs en plus de la première traverse (51).

5. Treillis (50) selon l'une des revendications précédentes, dans lequel, dans le prolongement d'au moins un des montants (53) ou parallèlement au plan du treillis (50), est disposé un flotteur (100), une partie d'un support de montage incliné, par exemple pour des installations solaires ou des éoliennes, ou une partie d'un support pour une plateforme ou d'un dispositif de levage.

6. Treillis (50) selon l'une des revendications précédentes, dans laquelle un rapport flottabilité/poids d'au moins la première traverse (51) est variable, par exemple par des moyens de mise en eau, par lesquels la première traverse (51) peut être remplie d'eau ou vidée d'eau, ou par des moyens de lestage qui peuvent être fixés de manière amovible à la première traverse (51) et qui augmentent ou diminuent le poids et/ou la flottabilité de la première traverse (51), et dans laquelle la deuxième traverse (52) est également flottable.

7. Treillis (50) selon l'une des revendications 2 à 6, dans lequel la première traverse (51) est constituée d'un corps creux et la première traverse (51) ou l'un des éléments de liaison (55) qui y sont fixés présente un orifice (75) par lequel au moins la première traverse (51) peut être remplie ou vidée d'eau et qui peut être obturée de manière étanche à l'eau.

8. Structure porteuse offshore (80) formée d'au moins deux treillis (50) selon l'une des revendications 2 à 7, dans laquelle les treillis (50) sont disposés de manière à flotter sensiblement à la surface de l'eau et sont reliés en damier pour former une structure s'étendant le long de la surface de l'eau au moyen des éléments de liaison (55) disposés dans les angles des treillis (50).

9. Structure porteuse offshore (80) selon la revendication 8, dans laquelle des bandes (54) munies de dispositifs de tension (60) et pouvant être fixées aux moyens de fixation (58) des éléments de liaison (55) peuvent être tendues dans les zones libres de la structure porteuse offshore (80) en forme de damier de telle sorte que les champs libres sont maintenus en forme ou tendus en diagonale au moyen des dispositifs de tension (60).

10. Structure porteuse offshore (80) selon l'une des revendications 8 ou 9, dans laquelle les éléments de liaison (55), des parties des éléments de liaison (55) ou des supports (66) reliant deux éléments de liaison (55) entre eux sont déformables élastiquement lorsque deux treillis (50) adjacents effectuent un mouvement relatif l'un par rapport à l'autre.

11. Module de structure de treillis (70) formé de trois ou quatre treillis (50) ou plus selon l'une des revendications 1 à 7, qui sont reliés entre eux par les éléments de liaison (55) pour former une structure prismatique triangulaire, rectangulaire ou polygonale droite, les premières traverses (51) fonctionnant comme des flotteurs définissant une surface de base sensiblement triangulaire, rectangulaire ou polygonale, les deuxièmes traverses (52) définissant une surface supérieure sensiblement triangulaire, rectangulaire ou polygonale congruente à la surface de base et deux montants (53) de deux treillis (50) adjacents formant respectivement un côté latéral, les éléments de liaison (55) des treillis (50) respectifs présentant des moyens de fixation auxquels peuvent être fixés des connecteurs (69) pourvus de dispositifs de serrage (60), afin de relier entre eux deux treillis (50) du module de structure en treillis (70) à des extrémités non adjacentes.

12. Module de structure en treillis (70) selon la revendication 11, dans lequel les connecteurs (69) s'étendent sensiblement dans le plan de la surface de base et/ou de la surface supérieure et/ou le long d'une diagonale dans l'espace et dans lequel les connecteurs (69) peuvent être reçus de préférence dans un alésage transversal (68) ménagé dans les boulons d'assemblage (67), par exemple au moyen de dispositifs d'encliquetage formés aux extrémités des connecteurs (69).

13. Module de structure en treillis (70) selon l'une des revendications 11 ou 12, qui peut flotter par la seule flottabilité des premières traverses (51).

14. Module de structure en treillis (70) selon l'une des revendications 11 à 13 ou structure porteuse offshore (80) selon l'une des revendications 8 à 10, dans lequel ou laquelle un ou plusieurs flotteurs (100), ou des supports de montage inclinés, des dispositifs de retenue d'éléments rapportés (96), des plateformes, des éoliennes, des grues ou similaires, peuvent être fixés à l'un des points de jonction (81, 82, 83, 84) formés par les éléments de liaison (55) et/ou à une ou plusieurs des premières et deuxièmes traverses (51, 52).

15. Module de structure en treillis (70) selon l'une des revendications 11 à 14, dans lequel un ou plusieurs ouvrages de support (90) sont disposés dans une surface supérieure définie par les deuxièmes traverses (52) et/ou dans une surface de fond définie par les premières traverses (51) et/ou dans un plan intermédiaire, les ouvrages de support (90) s'appuyant sur les premières traverses (51) ou les deuxièmes traverses (52) opposées et/ou sur les connecteurs (69), de sorte que des superstructures telles que des plateformes, des modules photovoltaïques ou similaires peuvent être supportées par les ouvrages de support (90).

16. Module de structure en treillis (70) selon la revendication 15, dans lequel le ou les ouvrages de support (90) présentent des voies de passage en forme de rails, à l'aide desquelles des moyens de transport (97) de type chariot ou panier peuvent être déplacés entre les premières traverses (51) ou les deuxièmes traverses (52) du module de structure en treillis (70).

17. Module de structure en treillis (70) selon l'une des revendications 11 à 16, dans lequel un flotteur (100) est disposé de façon mobile à la verticale sur un ou plusieurs des bords latéraux entre les premières traverses (51) et les deuxièmes traverses (52).

18. Module de structure en treillis (70) selon l'une quelconque des revendications 11 à 17, qui comprend plusieurs treillis (50) selon la revendication 7 et dans lequel au moins certains des corps creux obturés de manière étanche aux fluides sont reliés à un système de conduite de fluide par le biais des orifices (75) ménagés dans les traverses (51, 52) ou les éléments de liaison (55).

19. Structure porteuse flottante offshore (80) construite de manière modulaire à partir d'une pluralité de modules de structure en treillis (70) selon l'une des revendications 11 à 18, ou structure modulaire offshore (80) selon l'une des revendications 8 à 10, destinée au support flottant de dispositifs de retenue, de plateformes, de superstructures, de supports de montage inclinés pour installations solaires, éoliennes et similaires.

20. Centrale houlomotrice (200) construite de manière modulaire à partir d'une pluralité de modules de structure en treillis (70) selon l'une des revendications 14 à 18, dans laquelle les flotteurs (100) disposés entre les premières traverses (51) et les deuxièmes traverses (52) sont disposés sur des tiges de levage mobiles (25) parallèles aux montants (53) et sont reliés fonctionnellement à des arbres d'entraînement de générateurs linéaires (110) de telle sorte que des mouvements oscillants des tiges de levage (25) entraînent en rotation les arbres d'entraînement des générateurs linéaires (110).

21. Procédé d'assemblage d'au moins deux treillis (50) selon l'une des revendications 6 ou 7, comprenant les étapes consistant à :
a) disposer les treillis (50) sur une surface d'eau d'un plan d'eau dont la profondeur d'eau correspond au moins à la distance entre les premières traverses (51) et les deuxièmes traverses respectives (52) ;
b) réduire le rapport flottabilité/poids des premières traverses (51) de sorte que les premières traverses (51) s'enfoncent sous la surface de l'eau jusqu'à ce que les treillis (50) soient alignés sensiblement à la perpendiculaire de la surface de l'eau, les secondes traverses (52) continuant à flotter à la surface de l'eau ou au-dessus ;
c) relier chaque élément de liaison (55) des deux deuxièmes traverses (52) l'un avec l'autre afin de relier deux treillis (50) en un premier point de jonction (81) ;
d) fixer au moins un dispositif de stabilisation (91) aux deux treillis (50) reliés à l'étape c), de sorte que les montants adjacents (53) des deux treillis (50) sont maintenus sensiblement parallèles entre eux ;
e) accroître le rapport flottabilité/poids des premières traverses (51) de sorte que les treillis (50) remontent en conservant leur orientation l'un par rapport à l'autre et sensiblement perpendiculairement à la surface de l'eau, jusqu'à ce que les premières traverses (51) flottent à la surface de l'eau ou au-dessus ;
f) relier entre eux des éléments de liaison (55) disposés respectivement sur des premières traverses (51) adjacentes ;

22. Procédé selon la revendication 21, dans lequel, pour réduire le rapport flottabilité/poids des premières traverses (51), des moyens de lestage sont fixés de manière amovible aux premières traverses ou un tuyau est placé, au moyen duquel de l'eau est introduite dans la première traverse, et dans lequel, pour augmenter le rapport flottabilité/poids des premières traverses (51), les moyens de lestage sont retirés et/ou l'eau est retirée de la traverse.

23. Procédé selon la revendication 21 ou 22, dans lequel, avant d'effectuer les étapes e) et f), d'autres treillis (50) sont reliés à des treillis (50) précédemment reliés selon les étapes c) et d).

24. Procédé selon l'une des revendications 21 à 23, dans lequel, après l'une des étapes b) à f), des moyens de fixation (92) sont fixés entre deux treillis (50) respectifs de telle sorte qu'un angle prédéterminé demeure fixe entre les deux treillis (50).

25. Procédé selon l'une des revendications 21 à 24, dans lequel le dispositif de stabilisation (91) fixé à l'étape d) est monté sur les montants (53) des deux treillis de manière à pouvoir être déplacé dans la direction longitudinale des montants (53).

26. Procédé selon l'une des revendications 21 à 25, dans lequel les treillis (50) reliés entre eux à l'issue de l'étape f) sont transportés en eau moins profonde avant le montage des dispositifs de retenue d'éléments rapportés (96), de sorte que les dispositifs de retenue d'éléments rapportés (96) peuvent être montés au moins partiellement par un ou plusieurs monteurs debout sur le sol.

27. Procédé selon l'une des revendications 21 à 26, dans lequel, après l'étape e), le tuyau est retiré et les premières traverses (51) sont obturées de manière étanche à l'eau.

28. Procédé selon l'une des revendications 21 à 27, dans lequel les treillis (50) reliés sont reliés flottants à des treillis (50) précédemment reliés, à un module de structure en treillis flottant (70) selon l'une des revendications 11 à 18, à une structure porteuse offshore selon la revendication 8 à 10 ou 19, ou à une centrale houlomotrice (200) selon la revendication 20, par le biais d'éléments de liaison (55).

29. Procédé selon la revendication 28, dans lequel des éléments de construction en forme de tige pour des unités de montage, tels que des barres de levage, des mâts ou similaires, sont acheminés avec une extrémité à partir du dessous de la surface de l'eau au moyen d'un dispositif de levage ou de traction à travers la zone définie entre les éléments de liaison (55) le long des montants (53) d'un module de structure en treillis (70) selon l'une des revendications 11 à 18, dans une position sensiblement verticale parallèle aux montants (53).

30. Procédé selon l'une quelconque des revendications 21 à 29, dans lequel une surface supérieure est définie par les deuxièmes traverses (52) et des aides à la flottaison (99), des dispositifs flottants, des dispositifs de retenue d'éléments rapportés (96) et/ou des éléments rapportés (95) peuvent être soulevés de la surface de l'eau sur la surface supérieure ou dans un plan intermédiaire entre la surface supérieure et la surface de l'eau au moyen de plusieurs dispositifs de grue fixés sur ou entre les éléments de liaison (55) de la surface supérieure.
